# EUROPEAN PATENT SPECIFICATION

(11) **EP 1 324 829 B1**
(45) Date of publication and mention of the grant of the patent: **26.12.2007**
(21) Application number: 01973681.8
(22) Date of filing: 30.08.2001
(51) Int. Cl.: B01J 19/00, B01L 3/02, G01N 1/10

(54) **METHOD FOR HIGH-SPEED MICROFLUIDIC DISPENSING**
VERFAHREN ZUR HOCHGESCHWINDIGKEITS-MIKROFLUIDISCHEN-DISPERGIERUNG
PROCEDE DE DISTRIBUTION MICROFLUIDIQUE HAUTE VITESSE

(30) Priority: 30.08.2000 US 229003 P
(43) Date of publication of application: 09.07.2003
(73) Proprietor: Biodot, Inc., Irvine, CA 92614 (US)
(72) Inventor: CHURCHILL, Carl, Irvine, CA 92614, (US); TISONE, Thomas, C., Orange, CA 92869 (US); MILEDI, Rico, Irvine, CA 92612 (US)
(74) Representative: W.P. Thompson & Co.
(86) International application number: PCT/US2001/041964
(87) International publication number: WO 2002/018053

(56) References cited:
- EP-A- 0 990 528
- EP-A- 1 099 484
- EP-A- 1 128 310
- WO-A-99/30168
- US-A- 5 334 353
- US-A- 5 525 515
- US-A- 5 738 728
- US-A- 5 741 554
- US-A- 5 743 960
- US-A- 5 916 524
- US-A- 5 927 547
- US-A- 5 985 214
- US-A- 6 044 212
- US-A- 6 063 339
- US-A- 6 083 762
- US-A- 6 150 173
- US-A1- 2001 014 477
- US-A1- 2001 016 177
- US-A1- 2001 036 424
- US-B1- 6 203 759
- US-B1- 6 225 061

## Description

### Background of the Invention

### Field of the Invention

The invention relates to a method for dispensing reagents and other liquids onto a target or substrate and, in particular, to a method and apparatus for high-speed precision dispensing, controlled by input data from a user-defined text file, of multiple chemical or biological reagents with the ability to dispense a wide dynamic range of dispense volumes in complex combinatorial patterns, ratios and arrays onto or into a high-density microwell plate, glass slide, receptive membrane, test strip, vial or other suitable target

### Description of the Related Art

The nuclei of living cells possess chromosomes which contain the genetic information necessary for the growth, regeneration and other functioning of organisms. Instructions concerning such functioning are contained in the molecules of deoxyribonucleic acid (DNA). DNA is contained within the chromosome in a form of complimentary strands commonly thought of as being configured in a double helix.

Genetic information in DNA is contained within a sequence of nucleotide bases. The four bases consist of thymine (T), adenine (A), cytosine (C), and guanine (G). The two strands of the DNA double helix are joined in accordance with well known base pairing rules. These rules provide that T joins with A and that C joins with G. Accordingly, the base sequence along one strand determines the order of bases along the complementary strand.

Genetic and diagnostic information can be gathered by determining the sequence of bases in DNA strands. In genomics, which is the study of genes and their DNA, one such process utilizes a microarray of single strands of known DNA formed on a glass slide or other substrate. Typically, an unknown sample of DNA is broken into pieces and tagged with a fluorescent molecule. The unknown DNA sample is applied to the microarray; each piece binds or hybridizes only to its matching known DNA "zipper" on the microarray as determined by the base pairing rules. The perfect matches shine the brightest when the fluorescent DNA binds to them. Usually, a laser is used to scan the microarray for bright, perfect matches and a computer ascertains or assembles the DNA sequence of the unknown simple.

The microarrays can be used to read a particular human's genetic blueprint. The arrays decode the genetic differences that make one person chubbier, happier or more likely to get heart disease than another. Such arrays could detect mutations, or changes in an individual's chemical or genetic make-up, that might reveal something about a disease or a treatment strategy.

Proteomics is the study of the way proteins work inside cells, and how they interact with each other. Since cells make their proteins according to the DNA templates in genes, proteomics is a field that is linked to genomics. One aim is to work out the differences in protein action between diseased cells and healthy ones. Binding between proteins in such cells is analyzed to try to determine markers or indicators when disease strikes and to diagnose disorders.

Both genomics and proteomics involve the handling, transfer and assaying of microfluidic quantities of expensive reagents and other liquids. Microfluidic liquid handling is associated with areas such as DNA microarraying, protein crystallization, high-throughput screening and combinatorial chemistry, among others. It has application in key markets such as life science research, biodiagnostics, pharmaceutical, agrochemical and materials science, among others.

It can be a difficult task to precisely, accurately and efficiently handle, transfer and deliver accurate microfluidic quantities of liquids. These microfluidic quantities typically are in the range from the order of a nanoliter (nL) to tens of microliters (µL) though they may be smaller, such as in the picoliter range, or larger. The complexity of the task is further increased when dealing with a wide variety of valuable reagents, a wide range of reagent dispense volumes and many permutations of reagents and reagent volume ratios. Conventional technologies are generally inefficient in precisely controlling such complex operations.

US 5,985,214 discloses systems and methods for identifying useful chemicals in liquid samples. US 6,063,339 discloses apparatus and methods for dispensing chemical reagents and other liquids.

### SUMMARY OF THE INVENTION

The invention relates to methods for high-speed precision dispensing and/or aspirating of microfluidic quantities of reagents and other liquids. In one embodiment, the operation of the systems is controlled by data accessed from a customized user-defined text file. Advantageously, the use of such text file control allows high-speed precision dispensing of one or more reagents with a wide dynamic range of dispense volumes in complex combinatorial patterns, ratios and arrays onto or into multiple predetermined locations of a desired target or substrate. This is particularly advantageous when a large number of permutations of different reagents and permutations of reagent volume ratios are involved. The systems may be operated in a high frequency modulated mode to further improve accuracy and reliability.

In accordance with one embodiment, a method is provided for high speed precise dispensing of a microfluidic quantity of a reagent onto or into a target. The method comprises the step of positively displacing a precise quantity of the reagent to a dispenser. A volume of the reagent is formed for ejection from the dispenser onto or into the target by operating a solenoid valve at a frequency such that its operation is mechanically modulated, said solenoid valve comprising a seat and a moveable plunger that oscillates when said solenoid valve is operated at said frequency but does not contact said seat so that it remains open in oscillation to facilitate ejection of the volume. The volume is an integral multiple of the precise quantity and less than or equal to the microfluidic quantity. The volume of the reagent dispensed at a predetermined location on or in the target is controlled and coordinated.

For purposes of summarizing the invention, certain aspects, advantages and novel features of the invention have been described herein.

### Brief Description of the Drawings

Having thus summarized the general nature of the invention and some of its features and advantages, certain preferred embodiments and modifications thereof will become apparent to those skilled in the art from the detailed description herein having reference to the figures that follow, of which:

FIG. 1 is a simplified view of a dispensing apparatus having features and advantage in accordance with one embodiment of the invention;

FIG. 2A is a simplified view of a dispensing apparatus with multiple dispensers and having features and advantages in accordance with one embodiment of the invention;

FIG. 2B is a schematic generalized illustration of a dispensing apparatus with an array of dispensers and having features and advantages in accordance with one embodiment of the invention;

FIG. 2C is a simplified view of a dispensing apparatus with a manifold and having features and advantages in accordance with one embodiment of the invention;

FIG. 3 is a cross-sectional view of a solenolid valve dispensing head for use in accordance with either of the embodiments of FIGS. 1. 2A, 2B or 2C;

FIG. 4 is a cross-sectional view of a positive-displacement syringe pump for use in accordance with either of the embodiments of FIGS. 1, 2A. 2B or 2C;

FIG. 5 is a graph illustration initial (non-steady-state) dispense volumes versus target dispense volumes for a reagent dispensing method and apparatus in accordance with one embodiment of the invention and showing the effects of reagent pre-pressurization;

FIG. 6 is a schematic drawing illustrating a method of depositing an array or pattern of reagent onto a substrate and having futures and advantages in accordance with one embodiment of the invention;

FIG. 7 is a detailed partial schematic circuit diagram of a control system for a reagent dispensing apparatus having features and advantages in accordance with one embodiment of the invention;

FIG. 8 is a simplified flow chart illustrating one made of operation of a dispenser apparatus having features and advantages in accordance with one embodiment of the present invention;

FIGS. 9A-9C are simplified flow charts illustrating one mode of operation of a dispenser apparatus having features and advantages in accordance with one embodiment of the invention;

FIG. 10A is a schematic drawing illustrating an example of programmed mode are dispensing in accordance with one embodiment of invention such as for creating custom dot array patterns on a membrane or glass slide;

FIG. 10B is a schematic drawing illustrating an example of synchronized line dispensing in accordance with one embodiment of the invention, such as for creating high-density dot arrays on a membrane or glass slide;

FIG. 10C is a schematic drawing illustrating an example of synchronized line dispensing in accordance with one embodiment of the invention such as for filling conventional micro-well plates;

FIG. 10D is a schematic drawing illustrating an example of non-synchronized line dispensing in accordance with one embodiment of the invention, such as for filling vision micro-well plates;

FIG. 10E is a schematic drawing illustrating an example of dot array mapping in accordance with one embodiment of the invention, such as for mapping one or more micro-well plates onto a slide or other substrate;

FIG. 11 is a simplified schematic partial representation of a software package and associated text file creation and entry for controlling and coordinating the operation of a dispensing apparatus in accordance with one embodiment of the invention;

FIG. 12 is a graphical representation of a fluorescence versus peptide concentration standard curve formed by text file controlled dispensing in accordance with one embodiment of the invention;

FIG.13 is a graphical representation of a Fluorescence Polarization (FP) Assay curve formed by text file controlled dispensing in accordance with one embodiment of the invention;

FIG. 14A is a schematic graphical representation of the valve stopper face displacement and current applied to the solenoid valve as a function of time for a "normal' single dispense mode (valve fully opens and then closes);

FIG. 14B is a schematic graphical representation of the valve stopper face displacement and current applied to the solenoid valve as a function of time for a modulated dispense mode in accordance with one embodiment of the invention;

FIG. 15 is a photographic view of an aspirating and dispensing apparatus comprising a dispense head with a (1 x 4) array of dispense channels and having features and advantages in accordance with one embodiment of the invention;

FIG. 16 is a photographic close-up of the dispensing head of FIG. 15;

FIG. 17 is a photographic close up view of a dispensing head comprising a (8 x 12) array of dispensing channels and having features and advantages in accordance with one embodiment of the invention;

FIG. 18 is a photographic view of an aspirating and dispensing apparatus comprising a dispense head with a (1 x 96) array of dispense channels and having features and advantages in accordance with one embodiment of the invention; and

FIG.19 is a photographic close-up of the dispensing head of FIG. 18.

### Detailed Description of the Preferred Embodiments

U.S. Patent Nos. 6,063,339, 5,916,524, 5,738,728, 5,743,960 and 5,741,554 disclose the concept of a reagent dispensing apparatus and method in which a positive displacement syringe pump is used in combination with a liquid dispenser, such as a solenoid valve dispenser or piezoelectric dispenser, to achieve improved dispensing operations. The syringe pump meters a predetermined quantity or flow rate of reagent to the dispenser to regulate the quantity or flow rate of liquid reagent dispensed. Simultaneously, an associated X, X-Y or X-Y-Z table is controlled so as to move a substrate in coordinated relation with the dispenser operation such that the reagent density can be controlled, for example, in terms of volume of reagent deposited per unit length of substrate substantially independently of the particular flow characteristics of the liquid reagent or the particular operating parameters of the dispenser (within a given range).

Providing a positive displacement pump in series with the dispenser advantageously allows the quantity or flow rate of reagent to be controlled independently of the particular flow characteristics of the liquid being dispensed and/or the operating parameters of the particular dispenser. For example, the size of droplets formed by a dispenser can be adjusted by changing the operating frequency (for a solenoid valve or piezoelectric dispenser) or by adjusting the air pressure or exit orifice size (for an air brush dispenser) without affecting the flow rate of reagent. Also, the reagent flow rate can be controlled without substantial regard to the system operating parameters otherwise required to achieve stable dispensing operations. The quantity or flow rate of reagent dispensed is controlled or regulated independently by the positive displacement pump.

### System Overview

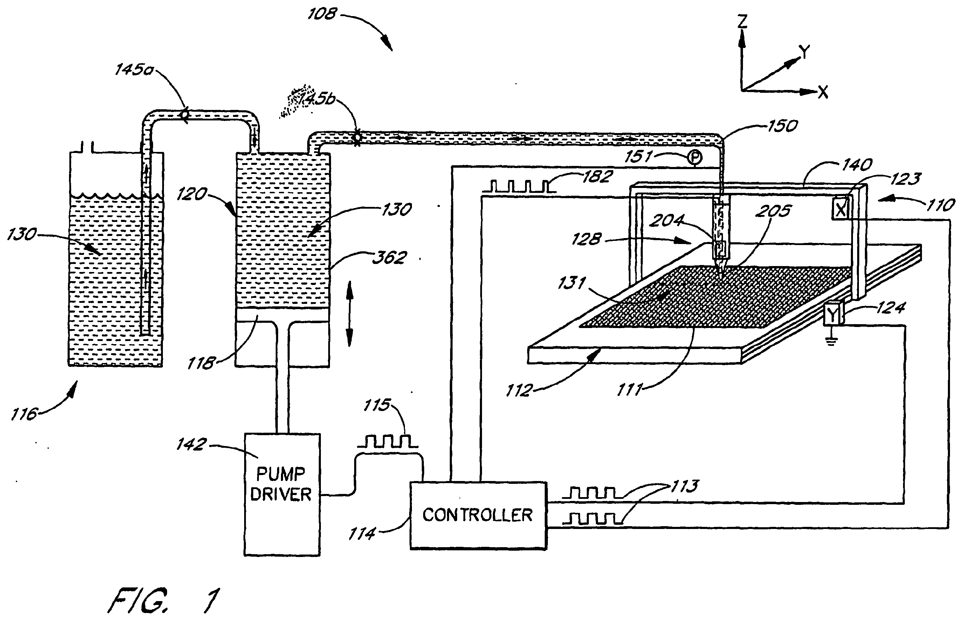

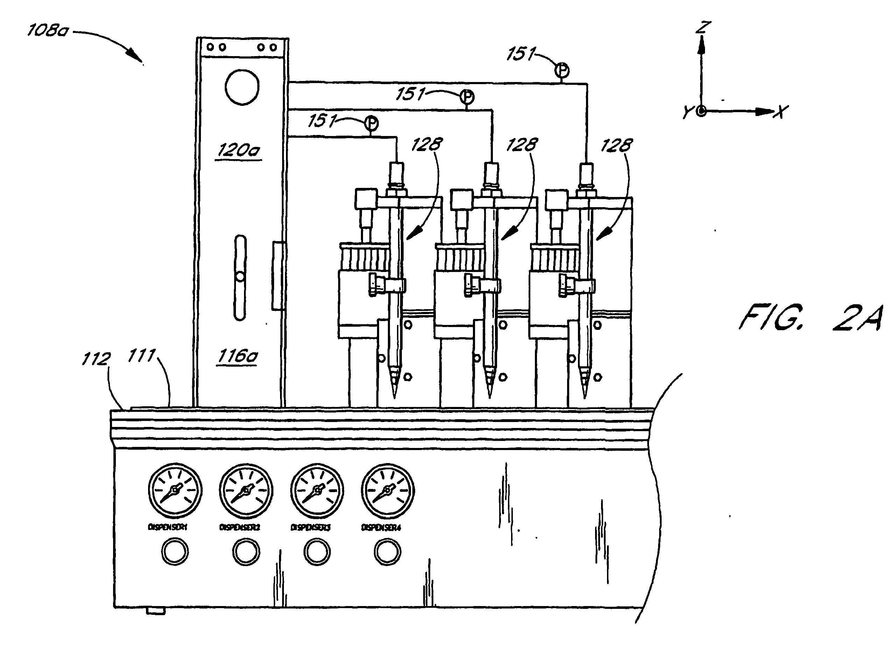

FIG. 1 is a simplified overview which illustrates one embodiment of a dispensing apparatus 108 having certain features and advantages in accordance with the present invention. The dispensing apparatus 108 is particularly adapted for automated high-speed precision dispensing (and aspirating) of liquids such as chemical and biological reagents, for example, DNA, cDNA, RNA, proteins, peptides, oligonucletides, other organic or inorganic compounds, among others.

The dispensing apparatus 108 (FIG. 1) generally comprises a dispensing head or dispenser 128 having a valve or other dispensing means 204 operated by an actuator, such as a solenoid- The dispenser 128 is hydraulically coupled or in fluid communication with a positive displacement pump 120 for metering precise quantities of fluid or liquid 130 to or towards the dispenser 128. The dispenser 128 is mounted on or in association with an X-Y table or gantry 110.

As shown in FIG. 1, a substrate or target 111 is mounted on a carrier platform, table or carriage 112 to receive reagent or liquid dispensed from the dispenser 128. The target 111 can comprise one or more microtiter plates, glass slides, receptive membranes, test strips, or other suitable porous or non-porous targets such as one or more single-well receptacles, vials or tubes. The microtiter plates can be configured in 96, 384, 1536 and 2080 well plate formats, among other configurations.

Those skilled in the art will appreciate that the X-Y table 110 (FIG. 1) may include one or more position stepper motors 123, 124 or the like, which are operable to move either the dispenser 128 and/or the carrier platform or table 112 relative to one another in the X, X-Y or X-Y-Z directions, as indicated in the drawing. Alternatively, or in addition, one or more suitable robot arms may be efficaciously used, as needed or desired, to provide controlled relative motion between the dispenser 128 and the target substrate 111 and/or other components or associated components of the apparatus 108.

Though FIG. 1 shows only a single dispenser 128, in other preferred embodiments and as discussed further below, it is contemplated that multiple dispensers in linear (1 x N) or two-dimensional (M x N) arrays are used. These may be provided and operated either in parallel or in another coordinated fashion, as desired. It should be understood that any discussion herein with specific reference to the single dispenser embodiment is substantially equally applicable, with possible modifications as apparent to the skilled artisan, to multiple dispensers each connected to respective pumps or a single pump.

The positive displacement pump 120 (FIG. 1) preferably comprises a syringe pump though other direct current fluid sources may be used with efficacy. The syringe pump 120 is hydraulically coupled to or in fluid communication with a fluid reservoir 116 through a first one-way check valve or open-close valve 145a. The syringe pump 120 draws fluid 130 from the fluid reservoir 116 and provides it to the dispenser 128 through a second check valve or open-close valve 145b on a supply line or feedline 150, as shown in FIG. 1.

The syringe pump 120 (FIG. 1) has a movable piston 118 within a syringe barrel 362. The syringe pump 120 is operated by a syringe pump driver 142 comprising, for example, a stepper motor and an associated lead screw, for extending and retracting the piston 118 within the syringe barrel 362. Those skilled in the art will readily appreciate that when the piston 118 is retracted, fluid 130 is drawn from the reservoir 116 into the syringe pump 120. When the piston 118 is again extended, fluid 130 is forced to flow from the syringe barrel 362 into the dispenser 128 via the supply tube 150, whereupon it is ejected by the dispenser 128 onto or into the target substrate 111 in the form of droplets 131 or a spray pattern.

In one embodiment, the fluid or liquid 130 (FIG. 1) comprises the reagent that is dispensed onto or into the target 111. That is the system (reservoir 116, pump barrel 362, dispenser 128 and other connection lines) is filled with the reagent 130 to be dispensed. This set-up is particularly advantageous when relatively large quantities of the same reagent are to be dispensed.

In another embodiment, the fluid or liquid 130 (FIG. 1) comprises a system fluid or backing reagent, such as distilled water, and the dispensing apparatus 108 operates in a "suck-and-spit" mode. In this embodiment, the dispenser 128 is used to aspirate a predetermined amount of fluid, liquid or reagent from a source receptacle or microtiter plate and the like and then dispense the aspirated reagent onto or into the target 111. As the skilled artisan will appreciate, reagent is aspirated by retracting or decrementing the pump piston 118 with the valve 145b open to create a reduced pressure or partial vacuum to draw source reagent into the dispenser 128 via a suitable tip or nozzle thereon.

As discussed in further detail later herein, a controller 114 (FIG. 1) oversees operation of the pump 120, X-Y table 110 (or X, or X-Y-Z table) and the dispenser 128, among other associated components. The controller 114 coordinates and controls the motion of each of the stepper motors 123, 124, and the syringe pump driver 142, as well as the opening and closing of the dispensing valve 204 to precisely dispense an amount of reagent at one or more predetermined location(s) on or in the target substrate 111. The controller 114 also controls and coordinates aspiration of source reagent, as and if needed.

As also discussed in further detail later herein, a computer software program is interfaced with the controller 114 (FIG. 1) to guide dispensing (and/or aspirating) for different modes of operation and different applications. Preferably, a user-defined text file is created, for example, from a spreadsheet of values or template, with lists of numbers of user-defined dispense volumes of one or more reagents and corresponding coordinates of the dispense (and/or aspirate) operation. The controller 114 uses this text file data in cooperation with the software program to precisely control and coordinate the operation of the dispensing apparatus 108.

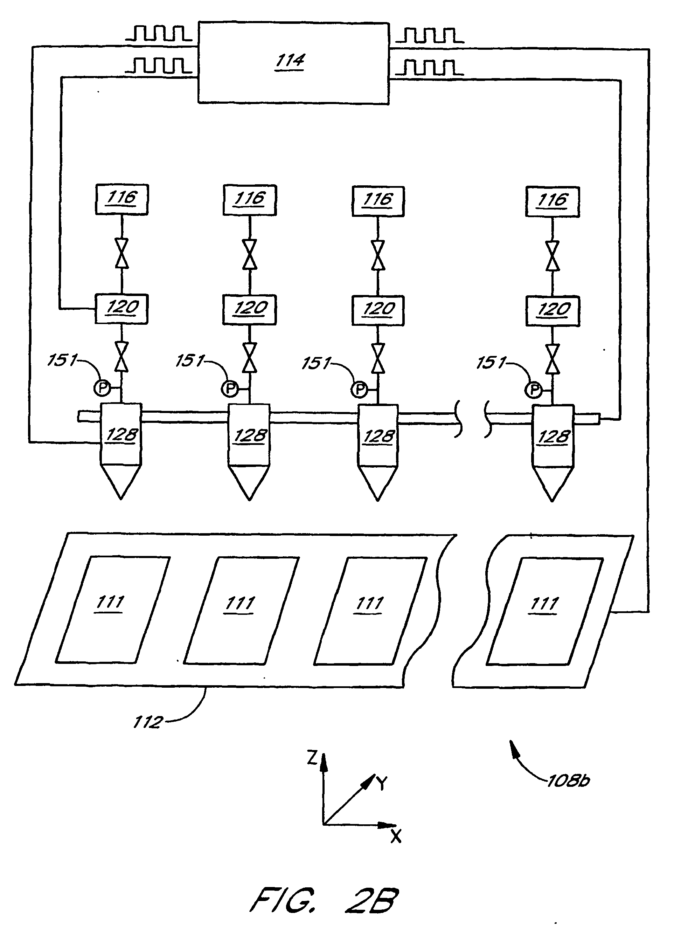

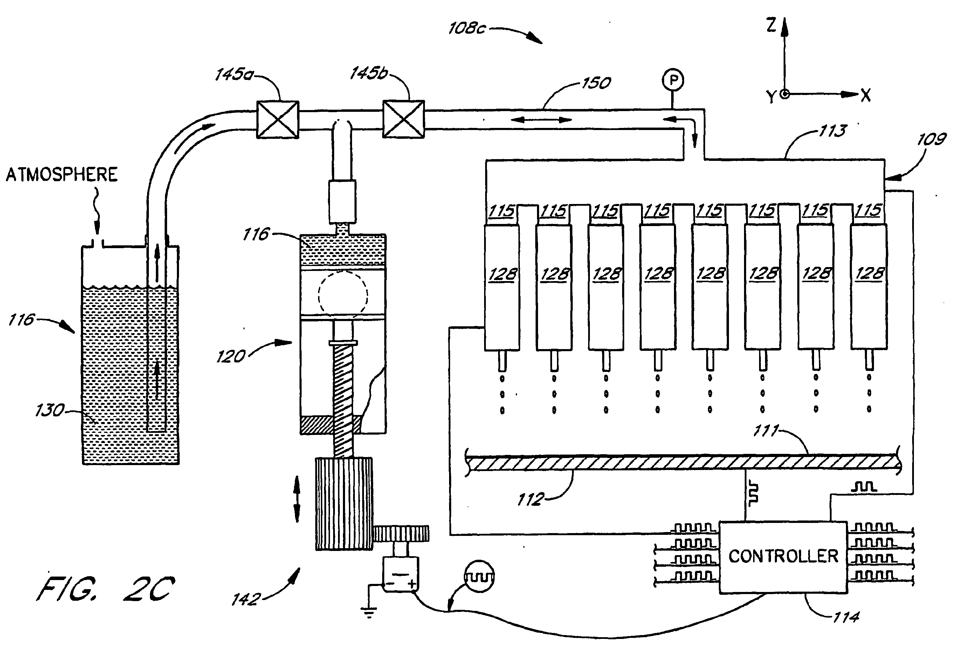

Advantageously, the use of such text file control allows high-speed precision dispensing of one or more reagents with a wide dynamic range of dispense volumes in complex combinatorial patterns, ratios and arrays onto or into multiple predetermined locations of a desired target or substrate. This is particularly advantageous when a large number of permutations of different reagents and permutations of reagent volume ratios are involved. In such cases, typically, more than one dispenser (see FIGS. 2A and 2B) or a manifold system (see FIG. 2C) or a combination thereof is utilized to facilitate process efficiency. These multiple dispensers can be operated in parallel or in synchronous coordination.

FIG. 2A is a simplified view of a dispensing apparatus 108a comprising a plurality of dispensers 128. As has been described above in reference to FIG. 1, each dispenser 128 is connected to a respective pump 120 (in FIG. 2A, the pumps 120 are part of a pump bank 120a and a reservoir bank 116a comprises the reservoirs 116). A single reagent may be dispensed by all of the dispensers 128 or multiple reagents, as needed or desired. Moreover, reagent(s) can be first aspirated and then dispensed, as discussed above.

Still referring in particular to FIG. 2A, relative motion is provided between the substrate or target 111 and the dispensing channels 128. The dispensers 128 and/or the platform 112 are movable in the X, X-Y or X-Y-Z directions to allow for precision dispensing at predetermined locations. Multiple targets 111 may be placed on the table 112, as needed or desired. The dispensers 128 can be independently moved or together in the form of a dispense head comprising multiple dispense channels 128 paced from one another by predetermined distance(s). Moreover, the dispensers 128 can be individually (serially or sequentially) operated or substantially simultaneously (parallely) or a combination thereof, as needed or desired. A central or main controller, possibly in conjunction with sub-controllers, is used to control and coordinate the actuations, of the pumps 120, dispensers 128 and relative movement between the target 111 and dispense channels 128.

FIG. 2B is a schematic view of a dispensing apparatus 108b comprising a plurality of dispensers 128. In general, the dispensing apparatuses described herein can comprise one or more dispensers 128 arranged in a wide variety of configurations such as linear (1 x N), two-dimansional (M x N) or even three-dimensional (M x N x K) arrays. It should be noted that the array or collection of dispensers or dispenser heads 128 may be referred to as a "dispensing head" comprising multiple dispense channels 128.

FIG. 2C is a simplified view of a dispensing apparatus 108c comprising a manifold 109 connected to a plurality of dispensers 128. The manifold generally comprises a main supply line 113 in fluid communication (hydraulically coupled) with a plurality of independent channels 115 each of which is in fluid communication (hydraulically coupled) with a respective one of the dispensers 128. A positive displacement syringe pump 120 is in fluid communication (hydraulically coupled) with the manifold 109 via the feedline 150. Reagent(s) can be first aspirated and then dispensed or a single reagent may fill the system, as discussed above.

Still referring in particular to FIG. 2C, relative motion is provided between the substrate or target 111 and the dispensing channels 128. The dispensers 128 and/or the platform 112 are movable in the X, X-Y or X-Y-Z directions to allow for precision dispensing at predetermined locations. Multiple targets 111 may be placed on the table 112, as needed or desired. The dispensers 128 are in the form of multiple dispense channels spaced from one another by predetermined distance(s). More than one manifold may be utilized, as needed or desired.

The dispensers 128 (FIG. 2C) can be individually (serially or sequentially) operated or substantially simultaneously (parallely) or a combination thereof, as needed or desired. A linear (1 × N) or two-dimensional (M x N) array of dispensers 128 may be used with efficacy. A central or main controller 114 is used to control and coordinate the actuations of the pump 120, dispensers 128 and relative movement between the target 111 and dispense channels 128.

Advantageously, and as shown in FIG. 2C, the use of a manifold 109 allows only one pump 120 to meter fluid to and from a plurality of dispensers 128. Desirably, this saves on cost. Moreover, balanced and controlled output can be achieved by adjusting the frequency and/or duty cycle of one or more of the dispensers 128 to compensate for any variations in flow resistances between channels.

### Solenoid Valve Dispenser

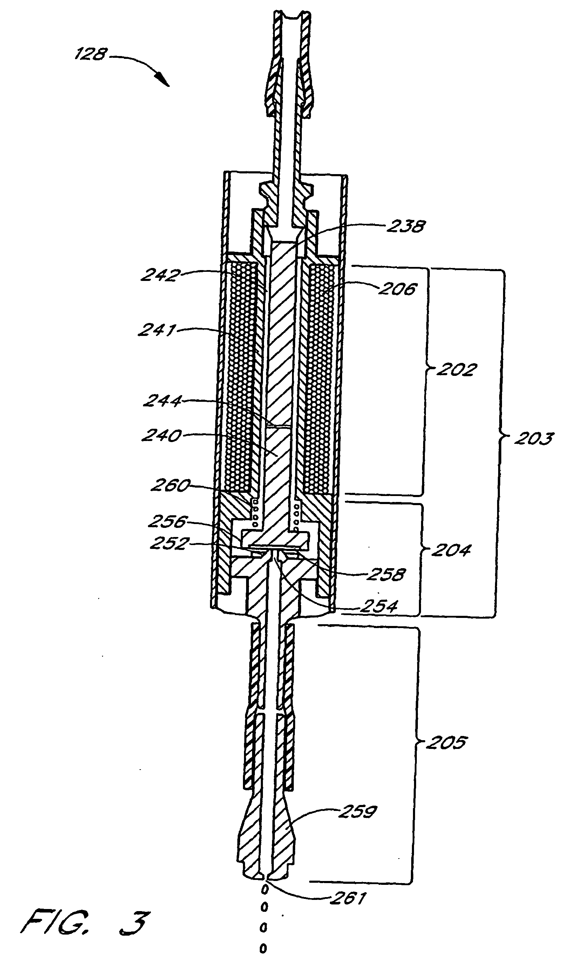

FIG. 3 is a cross-sectional view of one embodiment of a solenoid valve dispensing head 128 for use with the dispensing (and/or aspiration) systems as described herein. Solenoid valve dispensers of the type shown in FIG. 3 are commonly used for ink-jet printing applications and are commercially available from sources such as The Lee Company of Westbrook, Connecticut. Other suitable drop-on-demand dispensers and valves may be efficaciously used, as needed or desired.

The drop-on-demand dispenser 128 (FIG. 3) generally comprises a solenoid portion 202. a valve portion 204 and a tube, capillary, tip or nozzle portion 205. The solenoid portion 202 and the valve portion 204 in combination can be termed a drop-on-demand valve, a solenoid-actuated valve or a micro-solenoid valve 203.

The solenoid portion 202 (FIG. 3) comprises an electromagnetic coil or winding 206, a static core 238 and a movable plunger 240. The static core 238 and movable plunger 240 are disposed within a hollow cylindrical sleeve 241 and are preferably spaced at least slightly away from the inner walls of the sleeve 241 so as to form an annular passage 242 there between through which the reagent 130 or other liquid to be dispensed may flow. The static core 238 and movable plunger 240 are preferably formed of a ferrous or magnetic material, such as an iron alloy, and are separated by a small gap 244. Those skilled in the art will appreciate that when the solenoid coil 206 is energized, for example by a current or voltage, a magnetic field is created which draws the plunger 240 upward toward the static core 238, closing the gap 244 and opening the valve 234.

The valve portion 204 (FIG. 3) comprises a valve seat 252, having an orifice opening 254, and a stopper 256 having a valve face 258 adapted to seal against the valve seat 252. The stopper 256 is in electromechanical communication with the plunger 240 and is spring biased toward the valve seat 252 via coil spring 260. Again, those skilled in the art will readily appreciate that as the plunger 240 moves up and down, the valve 234 will open and close, accordingly, hence providing selective fluid communication with the tip 205. Moreover, each time the valve 234 opens and closes, a volume of liquid is allowed to escape through the valve orifice 254. This, in conjunction with the metering of fluid by the pump 120, forms an energy pulse or pressure wave which causes a droplet of liquid to be ejected from the exit orifice 261 of the nozzle tip 259.

As indicated above, preferably, the pump 120 (see, for example, FIG. 1) is a positive displacement pump and is provided in series with the solenoid valve dispenser 128. Configuring the dispensing system in this manner has the benefit of forcing the solenoid valve dispenser 128 to admit and eject a quantity and/or flow rate of reagent as determined solely by the positive displacement pump 120, with which it is hydraulically in series. For example, the syringe pump could be instructed to deliver a flow rate of 1 microliter per second of reagent to the solenoid valve dispenser 128 at a steady rate. As the valve stopper 256 is opened and closed at a given frequency and duty cycle a series of droplets are formed which will exactly match the desired flow rate. The syringe pump acts as a forcing function for the entire system, ensuring that the desired flow rate is maintained regardless of the duty cycle or frequency of the dispensing valve.

Advantageously, within a certain operating range the frequency and/or velocity of the droplets can be adjusted without affecting the flow rate of reagent simply by changing the frequency and/or duty cycle of the energizing pulses 182 (FIG. 1) provided to the solenoid valve dispenser 128. Of course, there are physical limitations of valve open time or duty-cycle necessary to achieve stable droplet formation. If the open time is too short relative to the flow rate, the pressure will increase and possibly prevent the valve dispenser 128 from functioning properly. If the open time is too long relative to the flow rate, then drop formation may be impaired or may not be uniform for each open/close cycle. Nevertheless, for a given flow rate of reagent 130 provided by the syringe pump 120 there will be a range of compatible frequencies and/or valve open times or duty-cycles in which stable dispensing operations may be achieved at the desired flow rate and droplet size. This range may be determined experimentally for a given production set up.

Certain embodiments of a solenoid actuated dispenser are described in PCT Publication No. WO 99/42752. published August 26, 1999, entitled "Reagent Dispensing Valve".

### Syringe Pump

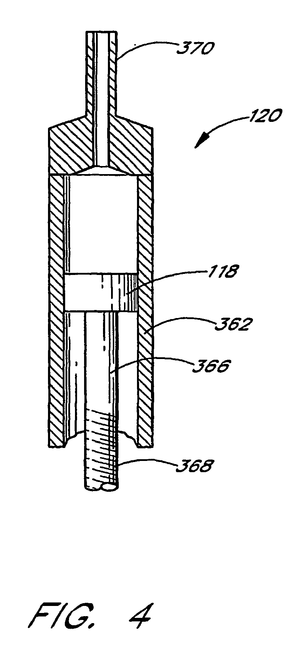

Referring in particular to FIGS.1 and 4, the pump 120 is preferably a high-resolution, positive displacement syringe pump hydraulically coupled to the dispenser 128. Alternatively, pump 120 may be any one of several varieties of commercially available pumping devices for metering precise quantities of liquid. A syringe-type pump 120, as shown for example in FIG.1, is preferred because of its convenience and commercial availability. A wide variety of other direct current fluid source means may be used, however, to achieve the benefits and advantages as disclosed herein. These may include, without limitation, rotary pumps, peristaltic pumps, squash-plate pumps, and the like, or an electronically regulated fluid current source.

As illustrated in FIG. 4, a suitable syringe pump 120 generally comprises a syringe housing 362 of a predetermined volume and a plunger 118 which is sealed against the syringe housing by 0-rings or the like (not shown). The plunger 118 mechanically engages a plunger shaft 366 having a lead screw portion 368 adapted to thread in and out of a base support (not shown). Those skilled in the art will readily appreciate that as the lead screw portion 368 of the plunger shaft 388 is rotated the plunger 118 will be displaced axially, forcing reagent 130 from the syringe housing 362 into the exit tube 370. Any number of suitable motors or mechanical actuators may be used to drive the lead screw 368. Preferably, a pump driver 142 including a stepper motor (FIG. 1) or other incremental or continuous actuator device is used so that the amount and/or flow rate of reagent 130 can be precisely regulated.

Several suitable syringe pumps are commercially available. One such syringe pump is the BioDot CV1000 Syringe Pump Dispenser, available from BioDot, Inc. of Irvine, California. This particular syringe pump incorporates an electronically controlled stepper motor for providing precision liquid handling using a variety of syringe sizes. The CV 1000 is powered by a single 24 DC volt power supply and is controlled via an industry-standard RS232 or RS485 bus interface. The syringe pump may have anywhere from 3,000-24,000 steps, although higher resolution pumps having 48,000-192,000 steps or more may also be with efficacy. Higher resolution pumps, such as piezoelectric motor driven pumps, may also be used to provide even finer resolutions as desired.

The lead screw 368 (FIG. 4) may optionally be fitted with an optical encoder or similar device to detect any lost steps. Alternatively, the lead screw of the metering pump can be replaced with a piezoelectric slide to provide both smaller volume increments and also faster acceleration/deceleration characteristics. Multiple syringe pumps may also be used in parallel, for example, for delivering varying concentrations of reagent 130 and/or other liquids to the dispenser or for alternating dispensing operations between two or more reagents. This could have application, for instance, to ink jet printing using one or more colored inks or liquid toners.

Syringe size may vary from less than 50 microliters (µL) to 50 milliliters (mL), or more as needed. The minimum incremental displacement volume of the pump will depend on the pump resolution and syringe volume. For example, for a syringe housing volume of 50 µL and 192,000 step resolution pump the minimum incremental displacement volume will be about 0.260 nanoliters (nL). Minimum incremental displacement volumes from about 0.25 nanoliters to about tens of milliliters (mL) are preferred, although higher or lower incremental displacement volumes may also be used while still enjoying the benefits disclosed, taught or suggested herein.

Of course, a wide variety of other positive displacement or "direct current" fluid sources may also be used to achieve the benefits and advantages as disclosed herein. These may include, for example and without limitation, rotary pumps, peristaltic pumps, squash-plate pumps, pumps incorporating hydraulic or electronic feedback control and the like.

### Pressure Compensation and Steady-State Pressure

In one embodiment, one or more pressure sensors 151 are provided in conjunction with the aspirate-dispense apparatuses 108 (FIG. 1), 108a (FIG. 2A), 108b (FIG. 2B) and 108c (FIG. 2C) to monitor the system pressure and provide diagnostic information about various fluid and flow parameters within the hydraulic system. The one or more pressure sensors 151 are provided at appropriate locations on the respective systems. In one embodiment, the pressure sensors 151 are placed intermediate the syringe pump(s) 120 and the dispenser(s) 128, such as on the feedline 150 (see, for example, FIG. 1). Alternatively, or in addition, the pressure sensor(s) 150 can be situated at the dispenser(s) 128 such as on the valve portion(s) 204.

It should be noted that for purposes of brevity of disclosure some of the discussion here refers to a single pump-dispenser apparatus. Of course, it should be understood that this can be suitably extrapolated to include operation of the embodiments of arrays of pump-dispenser systems, for example, the systems of FIG. 2A and 2B. Moreover, and as one of ordinary skill in the art will appreciate, it is further extendable with some modifications to manifold systems, for example, the manifold dispensing system of FIG. 2C.

Referring in particular to FIG. 1, the skilled artisan will recognize that the hydraulic coupling between the pump 120 and the dispenser 128 of the aspirate-dispense system 108 provides for the situation where the input from the pump 120 exactly equals the output from the dispenser 128 under steady state conditions. Therefore, the positive displacement system uniquely determines the output volume of the system while the operational dynamics of the dispenser 128 serve to transform the output volume into ejected drop(s) having size, frequency and velocity.

It has been discovered, however, that within the system there exists an elastic compliance partly due to the compliance in the delivery tubing and other connectors and components, and partly due to gaseous air bubbles that may have precipitated from air or other gases dissolved in the system and/or source fluid. As a result of this elastic compliance, initial efforts to dispense small quantities of fluid resulted in gradually overcoming the system compliance and not in dispensing fluid or reagent. Once this elastic Compliance was overcome, a steady state pressure was found to exist and complete dispensing occurred thereafter.

A discussion of the theoretical predicted behavior and theoretical flow models relating to positive displacement dispensing and aspirating systems can be found in PCT Publication No. WO 99/42804. published August 26, 1999, entitled "Methods for Microfluidic Aspirating and Dispensing".

Thus, by providing a positive displacement pump 120 (FIG. 1) in series with a dispenser 128 (FIG. 1) has the benefit of forcing the dispenser 128 to admit and eject a quantity and/or flow rate of reagent as determined solely by the positive displacement pump 120 for steady state operation. In essence, the syringe pump 120 acts as a forcing function for the entire system, ensuring that the desired flow rate is maintained regardless of the duty cycle, frequency or other operating parameters of the dispensing valve, such as the solenoid-actuated valve 128 (FIG. 3). With such configuration and at steady state operation one does not really care what the pressure in the system is because it adjusts automatically to provide the desired flow rate by virtue of having a positive displacement or direct current fluid source as a forcing function for the entire system

However, this does not address the situation of latent and/or transient pressure variations, such as associated with initial start-up of each dispense and aspirate function, In particular, it has been discovered that the pressure in the system is of critical concern for non-steady state operation involving aspirating or dispensing of microfluidic quantities, typically greater than about I nanoliter (nL) and less than about 50 microfiters (µL), of liquid reagents or other fluids. Specifically, for an aspirate function it has been discovered that a system pressure close to or below zero is preferred, while for a dispense function it has been discovered that a finite and positive predetermined steady state pressure is preferred.

The transitions between various modes (aspirate, dispense, purge/wash) and/or flow rates or other operating parameters can remit in pressure transients and/or undesirable latent pressure conditions within the positive displacement dispense/aspirate system. Purge and wash functions usually entail active dispensing in a non-target position. In some cases, when the same reagent is to be aspirated again, several aspirate-dispense cycles can be performed before executing a purge or wash function. Also, sometimes a purge function may have to be performed during a dispense function, for example, to alleviate clogging due to the precipitation of gaseous bubbles within the system and/or source fluid. Moreover, the accumulation of these bubbles can change the system compliance over time, and hence the desired optimum dispensing pressure.

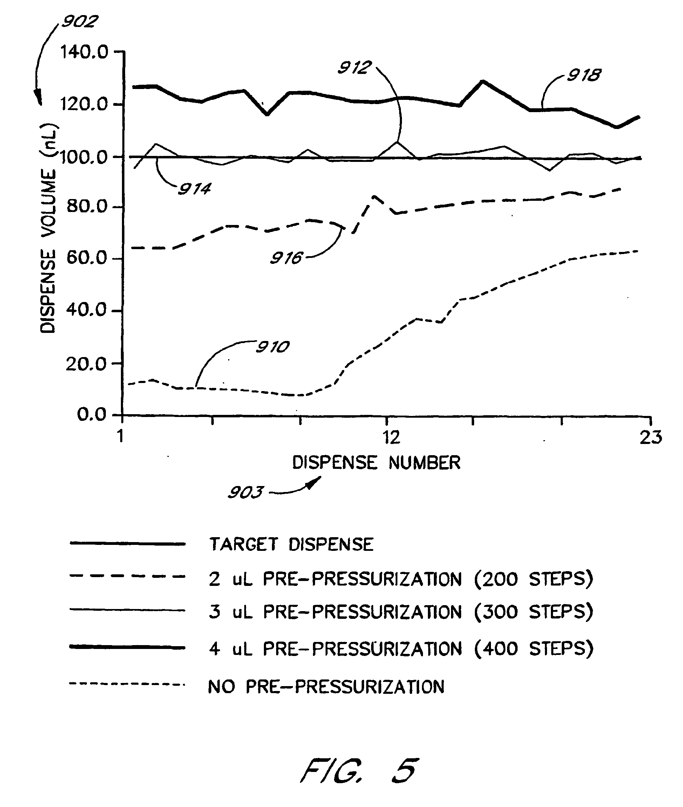

For example, line 910 in FIG. 5 illustrates transient dispense effects caused by initial start-up of a dispensing system 108 (FIG. 1) in which no pressure compensation scheme is utilized. The x-axis 903 represents the dispense number or number of dispenses and the y-axis 902 represents the dispense volume, in nanoliters (nL) of each droplet or droplets dispensed. Line 914 in FIG. 5 represents the target dispense volume of 100 nL.

As can be seen by the data of FIG. 5, the non-pressure compensated (non-steady state) dispensed volume represented by line 910 is substantially smaller than the target dispense volume of 100 nL (line 914) since the system pressure at start-up is substantially lower than the desired steady state and/or predetermined pressure. The non-pressure compensated dispense volume (line 910) can he lower by a factor of about ten compared to the target dispense volume (line 914). Moreover, even after 23 dispenses (see FIG. 5) the dispensed volume (line 910) is still below the target volume (line 914).

Line 912 represents a series of about 100 nL dispenses performed in accordance with one embodiment, wherein an optimized pressurizing (300 steps of the syringe plunger 118 -- shown in FIGS. 1 and 3) is performed prior to dispensing, that is, with the valve 204 (FIGS. 1 and 4) closed. The pressure compensation scheme provides dispense volumes (line 912) which are in substantially close conformity with the target dispense volume (line 914) of 100 nL Under-pressurization (200 steps of the syringe plunger 118), as illustrated by line 916, can result in dispense volumes that are undesirably less than the target dispense volume 914. Similarly, as illustrated by line 918, over-pressurization (400 steps of the syringe plunger 118) can result in dispense volumes that are undesirably more than the target dispense volume 914.

Certain embodiments of pressure compensation or adjustment, for example, prior to dispense and aspirate functions, are described in copending U.S. Application No. 091253,123, filed February 19,1999, entitled "Methods for Microfluidic Aspirating and Dispensing", copending U.S. Application No. 09/372,719, filed August 11, 1999, entitled "Multi-Channel Dispensing System", copending U.S. Application No. 09/575,395, filed May 22, 2000, entitled "State-Variable Control System" and PCT Publication No. WO 99/42804, published August 26, 1999, entitled "Methods for Microfluidic Aspirating and Dispensing".

In brief, to set the system pressure to a predetermined and/or steady state dispense pressure, the syringe plunger 118 (FIGS. 1 and 4) is typically incremented (or possibly decremented) by a predetermined amount to build up (or reduce) pressure, as described above in connection with FIG. 5. Similarly, to set the pressure to a predetermined and/or steady state aspirate pressure, the syringe plunger 118 (FIGS. 1 and 4) is typically decremented (or possibly incremented) by a predetermined amount. Of course, pre-dispenses of reagent or system fluid in a waste position may be performed to raise or lower the system pressure, as needed or desired.

One or more pressure sensors, such as the pressure sensor(s) 151 (FIGS. 1, 2A, 2B and 2C) are used to monitor the system pressure and ensure that the correct operational pressure (s) are achieved. Any one of a number of commercially available pressure sensors may be efficaciously used. The pressure sensors 151 are preferably differential type devices.

The desired steady state dispense pressure can be estimated from flow resistances and/or prior steady state pressure measurements or transient pressure measurements. A number of parameters can affect the selection of this pressure, including the desired droplet volume and system compliance, among other fluid, flow, system and operational parameters.

Some embodiments of methods for estimating this steady state dispense pressure are described in PCT Publication No. WO 99/42804, published August 26, 1999, entitled "Methods for Microfluidic Aspirating and Dispensing".

The steady state pressure can also be estimated from previously formulated parametric tables or charts based on one or more fluid, system, flow and operational parameters. Regression analysis techniques may be used to estimate the optimum dispense pressure. Alternatively, or in addition, the dispense pressure may be predetermined for a given production set-up.

In one embodiment, the aspirate-dispense systems disclosed herein are configured to minimize the formation and accumulation of gaseous bubbles within the fluid residing in the system, and particularly in the dispensers 128 (FIGS. 1, 2A, 2B and 2C), feedline 150 and manifold 109 (FIG. 2C). For example, to minimize bubble formation, the system components be configured such that the fluid movements within the system avoid sharp local pressure drops, and hence gaseous bubble precipitation. Additionally, the components may be configured such that none or few "dead spots" are encountered by the fluid, thereby discouraging bubble accumulation within the system. These configurations can utilize suitably tapered inner cavities or lumens within the valve portion 204, tip 205 and/or nozzle 259 to provide relief from gaseous hubble precipitation and/or "dead spots."

In one embodiment, a suitably configured bubble trap (not shown) is provided in fluid communication with the dispenser 128 (see, for example, FIG. 1). The trap encourages the migration of gaseous bubbles to collect within the trap and prevents undesirable bubble accumulation within the aspirate-dispense system.

### "On-the-Fly" Operation

In one embodiment, the dispensing operation takes place on-the-fly, that is without stopping the motion of the X-Y table. To accommodate this on-the-fly dispensing without compromising accuracy, precision or repeatability, the controller 114 calculates a phase adjustment for each dispense cycle. The phase adjustment is such as to advance (or retard) the timing of the valve opening and closing so that the dispensed droplet of reagent lands at the desired location on the substrate 111 (or at a desired offset location), taking into account its anticipated trajectory.

Those skilled in the art will recognize that the magnitude of the necessary or desired phase adjustment will depend, among other things, on a number of system input and output parameters and behavioral characteristics, including the desired drop offset (if any), the vertical distance between the dispenser nozzle 205 and the surface of the substrate 111. the velocity and/or acceleration of the dispenser 128 and/or the substrate 111 relative to one another, the velocity of the dispensed droplets, ambient temperature and humidity, and other controlled and/or uncontrolled factors. While certain of these parameters or characteristics can be isolated and studied such that their impact on the necessary phase adjustment is fairly predictable, other parameters or characteristics can neither be isolated nor predicted. It is however contemplated, that precise phase adjustments can be determined experimentally for a given production set up either before or during production such that a high degree of accuracy, precision and repeatability is attained during long production runs.

### Controller Overview

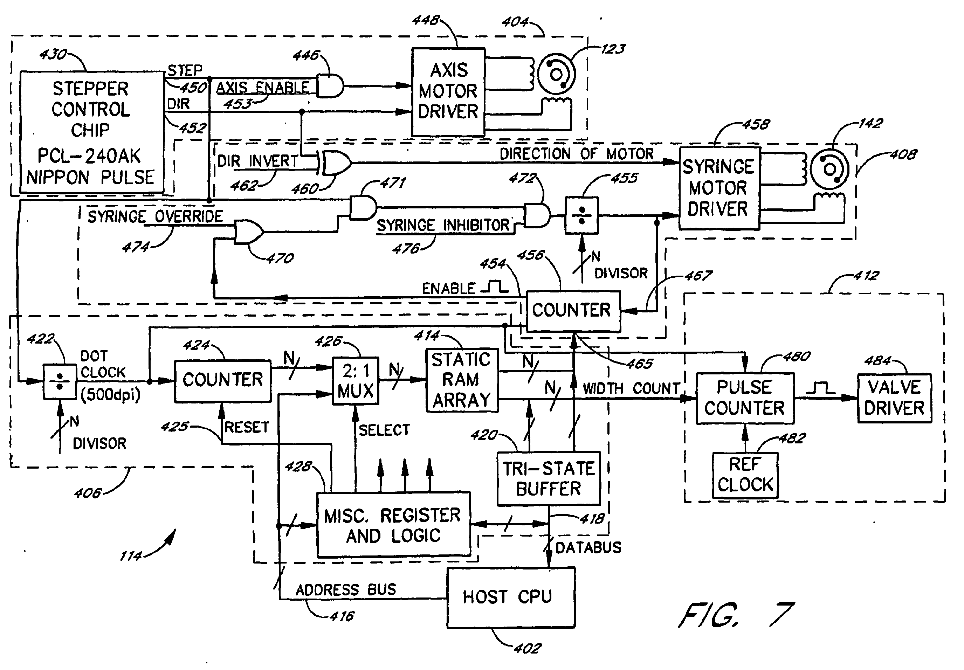

FIG. 7 illustrates one possible embodiment of an electronic controller 114 for controlling and coordinating the operation of the aspirate-dispense apparatus 108 (FIG. 1). Of course, and as indicated above, this controller design is extendable and/or adaptable to control and coordinate the operations of systems comprising multiple pumps 120 and cooperating dispensers 128, as shown for example in FIGS. 2A and 2C, and/or systems comprising a manifold intermediate a single pump 120 and multiple dispensers 128, as shown for example in FIG. 2C. Thus, as the skilled artisan will appreciate, the following description of the controller 114 should be construed in light of possible modifications and equivalents.

The controller 114 (FIG. 7) generally comprises a host CPU 402 or computer which interfaces with some form of data memory. In particular, the controller may be roughly divided into five basic subsystems: host CPU 402, coordinate control circuitry 404, memory and logic circuitry 406, syringe stop count circuit 408, and valve firing circuit 412. Each of these subsystems are illustrated schematically by phantom lines in FIG. 7 and are described in more detail below.

Those skilled in the art will appreciate that each subsystem works in cooperation with the other subsystems to simultaneously control the coordinate stepper motors 123, 124 (FIG. 1) the syringe pump motor 142 (FIG. 1) and the solenoid valve dispenser 128 (FIG. 1) to achieve the desired operation. The controller 114 is further adapted to control aspiration of fluid, perform wash/purge operations and refill the system with fluid from the reservoir 116 (FIG. 1), as needed or desired. Host CPU

A host CPU 402 serves as the central controller and also the interface between the controller 114 and the user. It allows the operator to input dispensing, aspirating, motion and/or other operational data, preferably in the form of a user-defined "Text File", as discussed in greater detail below. The CPU 402 allows the user to control, either independently or simultaneously, each aspect of the dispensing and aspirating apparatus 108 (FIG.1)

In one embodiment, the host CPU 402 generally comprises a 80x86 or Pentium-based computer having a slot or bus compatible to accept a plug-in circuit board. The circuit board or "controller card" contains the four subsystems shown in FIG. 7. The controller card mounts or plugs into a computer bus providing data transfer and communication of instructions. The host CPU 402 also provides power to the controller card and further allows an operator to access, program and control the functions of the controller card. It is further contemplated that the host CPU 402 contains suitable computer software compatible with the host CPU and the controller card which facilitates operation of the system as described herein.

Preferably, a display device and data input means are integral with the host CPU 402 thereby providing means to input data into a memory or static RAM array 414 located on the controller card and to verify the same using the display device. As is known by those of ordinary skill in the art, a keyboard, mouse, trackball, light pen, capacitance touch screen, computer storage media are all acceptable data input means. Likewise, a color video monitor or screen provides a suitable display means.

Using a data entry device, such as a keyboard, an operator may enter data into the host CPU 402 in the form of a data array (or graphical bit map) to thereby instruct the electronic controller and dispensing apparatus of the desired reagent pattern and characteristics. Conventional computer software may facilitate the entry of the data array (or bit map) via the host CPU 402 to the memory 414 of the controller card. As described in further detail below, preferably, a user-defined text file is used to provide input data to the controller 114 (FIG. 7).

In one embodiment, the controller card is compatible with a PC-AT clone, i.e. 80×86 or Pentium-based architecture. The controller card form factor and bus configuration match a PC-104 format, thereby allowing the circuit design to be quickly and inexpensively manufactured in a circuit board format. In the particular preferred embodiment shown and described above, the host CPU 402 utilizes a Motorola 68332 processor as the main microprocessor. However, as known by those skilled in the art, other computer systems and host CPU's may be used with equal advantage.

For the purposes of the present application, a bus generally comprises an electrical connection which facilitates the exchange of information, such as address information, data information and/or instructions. The controller 114 (FIG. 7) includes an address bus 416 which carries address information, and a data bus 418 which carries data information. The data bus 418 and the address bus 416 connect to the memory and logic circuitry 406. Advantageously, the data bus 418 and the address bus 416 are bi-directional thereby allowing the transfer of data between the controller card and the memory and logic circuitry 406. Thus, the controller 114 may display status information from the controller card on the video display of the host CPU 402 or alternatively, write the information to a data file on a permanent storage medium As is known to those of ordinary skill in the art, other types of electrical connections exist which carry electronic information and are fully contemplated for use with the embodiments disclosed, taught or suggested herein. Memory and Logic Circuitry

Connected to the host CPU 402 (FIG. 7) is a network of circuitry referred to herein as the memory and logic circuitry 406. In general, the memory and logic circuitry 406 stores the data which defines the desired dispensing and aspiration pattern and characteristics. As described in further detail below, preferably, a user-defined text file is used to provide operational data to the controller 114 (FIG. 7). Other hard-wired logic circuitry, such as a counter 424 and multiplexer 426, may also be used, as desired, to parse dispensing data to the other subsystems of the controller 114 or to speed up the processing of information and control data.

In particular, the memory and logic circuitry 406 (FIG. 7) generally comprises an electronic memory 414 for staring data regarding reagent dispense, aspirate and motion parameters, a tri-state buffer 420, a divisor 422, an address counter 424, a multiplexer 426 and various logic circuitry to assure proper operation of the electronic controller 114. The tri-state buffer 420 connects to the host CPU 402 via the data bus 418 and serves to isolate the CPU from the controller card. The buffer is adapted to rapidly accept and store data to further increase data transfer speed and free the host CPU 402 of data transfer operations. In turn, the tri-state buffer 420 connects to the memory module 414, preferably a static ram array. The tri-state buffer 420 also connects to the output lines of the static ram array 414 for direct control of the syringe motor 142 (FIG.1) and the solenoid valve dispenser 128 (FIG. 1).

The static ram array 414 (FIG. 7) comprises an electronic memory device which stores the data in the form of a data array sent from host CPU 402 via the tri-state buffer 420. The data array 414 defines the reagent dispensing and/or aspiration pattern, preferably, provided at least in part by a text file, as discussed below. Advantageously, access to each value in the data array 414 corresponds to a data array address thereby allowing access to specific data in the data array.

A 2:1 multiplexer 426 (FIG. 7) connects via the address bus 416 to the host CPU 402. The 2:1 multiplexer 426 allows the operator to select which of the two inputs pass to the output. The multiplexer 426 has two inputs: a first input which connects to the output of the counter 424 and a second input which connects to the address bus 416. In one embodiment, the multiplexer 426 provides a data array address from the host CPU 402 or, during steady state operation, from the output of the memory and logic circuitry counter 424. Those skilled in the art will recognize that when the multiplexer 426 passes the counter output to the static RAM array 414, the address increments automatically by way of a stepper control chip output. The output of the stepper control chip 430 advantageously serves as the main clock for the controller and thereby synchronizes operation of the system 108. A more detailed discussion of the stepper control chip 430 is provided below.

The counter output 424 (FIG. 7) provides one of the two inputs to the multiplexer 426. As known by those of ordinary skill in the art, a counter 424 comprises digital logic circuit which records input pulses to produce a binary word that increases or decreases in value by a predetermined number (preferably 1) upon each input pulse. This binary word provides the next address for retrieving data from the data array and/or directly from a user-defined text file. Thus, the counter 424 operates to increment the address of the data array 414. The counter 424 is preferably a resettable circuit and a reset line 425 is provided from the miscellaneous register and logic 428 to reset the counter 424. The counter 424 may also be reset either automatically or manually via an interrupt (not shown) from the host CPU 402.

The output of divisor circuitry 422 (FIG. 7) provides input to the counter 424. The divisor 422 provides an output after receiving N number of input pulses, where N is the number of input pulses required to trigger an output pulse. If desired, the divisor 422 can be user adjustable so that the value for N may be set by the operator. Thus, the resolution of the dispensing apparatus may be controlled by the number of pulses output by the stepper control chip 430 and the value assigned to N. As known by those of ordinary skill in the art, a divisor 422 can readily be implemented using a form of a counter circuit wherein the counter circuit outputs a pulse upon receipt of a certain number of input pulses. The input to the divisor 422 is the main clock signal provided by the stepper control chip 430. The divisor circuit 422 also provides output to the syringe stop count circuit 408 and the valve firing circuit 412, described below.

Dual output lines from the static ram array 414 (FIG. 7) connect to each of the syringe stop count circuit 408 and the valve single shot circuit 412, both of which are described in more detail below. Those skilled in the art will appreciate that the output of the static ram array 414 defines the desired syringe motor increment and the valve pulse duration and is sequentially incremented by the address counter input.

To facilitate operation, miscellaneous registers and logic, shown at step or block 428, are integral with the above described componentry. As known by those of ordinary skill in the art, various logic circuitry and storage registers 428 are interspersed with the componentry described herein as appropriate. Alternatively, much of the electronic hardware described herein could be embodied through the use of suitable software, as desired or appropriate. Coordinate Control Circuitry

Coordinate control circuitry 404 (FIG. 7) moves the dispensing head 128 (FIG. 1) to each desired and/or predetermined location. While FIG. 7 only shows circuitry for X axis motion control, those skilled in the art will readily appreciate that Y axis motor control is also contemplated with the present invention to facilitate operation with an X-Y table. In another embodiment, the controller 114 may also incorporate Z axis motion to achieve compatibility with an X-Y-Z table. This provides additional control of the system by providing means to vary the distance between the dispensing head 128 and the substrate 111 (FIG. 1). Also, one or both of the dispenser 128 and substrate may be movable in the X, X-Y or X-Y-Z. Furthermore, as indicated above, relative movement may be provided for the embodiments of FIGS. 2A-2C.

The coordinate control circuitry 404 (FIG. 7) generally comprises a stepper control chip 430, control logic 446 and an axis motor driver 448. As discussed in greater detail below, the coordinate control circuitry 404 provides input to the divisor 422 of the memory and logic circuitry 406. The coordinate control circuitry 404 also provides control of an axis stepper motor 123 (FIG. 1) and input to the syringe stop count circuit 408 and the valve firing circuit 412.

The stepper control chip 430 (FIG. 7) generates a constant step pulse output. This step pulse output serves dual purposes. First, the step pulse provides a control signal to the axis motor drive 443 which in turn powers the stepper motor 123. The stepper motor controls the dispensing head position along the X-axis. Second, the step pulse, or a divided form thereof, propagates throughout the system as the main clock pulse. The stepper control chip 430 is of the type often used to operate stepper motors. One embodiment described herein utilizes a Nippon Pulse PCL-240AK available from the Nippon Pulse Motor Co., Ltd, although other stepper motor control chips are currently available and are operational with the embodiments disclosed herein.

Moving now in more detail to the coordinate control circuitry, the stepper control chip 430 (FIG. 7) has two outputs: a step pulse output 450 and a direction signal output 452. The first output, the step pulse output 450, connects to at least one logic device to regulate the operation of the step motor 123. In this embodiment the logic device comprise a dual-input AND gate 446. One input of the AND gate 446 connects to the step pulse output 450 from the stepper control chip 430. An axis enable line 453 connects to the other input of the AND gate 446. The axis enable signal, when high, allows the step pulse output to propagate to the output of the AND gate 446. The memory and logic circuitry 406, described above, provides the axis enable signal to the AND gate 446 thereby providing means to cease movement of the dispensing head 128, either automatically via the data array or manually via the host CPU 402.

The second output of the stepper control chip 430 (FIG. 7), the motor direction control signal, is provided on a direction control line 452 to control the direction of the X axis stepper motor 123. The motor direction line 452, which carries the motor direction signal, connects directly to the axis motor driver 448. The stepper motor direction signal is also fed to the syringe stop count circuit 408, described in more detail below. Changing the state or logic level of the direction line, changes the direction of the X-axis stepper motor 123. This advantageously provides for bi-directional printing which, as noted above, speeds dispensing operation.

An axis motor driver 448 (FIG. 7) receives the output from the AND gate 446 and the stepper control chip 430. The axis motor driver 440 is an electronic device controlled by normal logic level signals which correlates the logic level input signals into a specialized output having increased current sourcing ability to drive a stepper motor. As is known by those of ordinary skill in the art many different axis motor drivers are available which satisfy the needs of the current invention.

The output of the axis motor driver 448 (FIG. 7) is provided to the X-axis stepper motor 123 (FIG. 1). The stepper motor 123 controls movement of the dispensing head 128 in relation to the substrate 111 (FIG. 1). Preferably, the stepper control chip 430, axis motor driver 448, and stepper motor 123 have resolution of greater than about a hundred steps per linear inch, more preferably greater than about five hundred steps per linear inch, even most preferably greater than about seven hundred fifty steps per linear inch. Syringe Stop Count Circuit

The syringe stop count circuit 408 (FIG. 7) controls the syringe pump 120 (FIG. 1) based on signals received from the stepper control chip 430 and the memory and logic circuitry 406. The syringe stop count circuit 408 comprises control logic, a syringe circuit divisor 455, a syringe circuit counter 456, and a syringe motor driver 458. Advantageously, the syringe stop count circuit 408 is synchronized with the other subsystems of the controller 114 to ensure precise and synchronized control over syringe motor driver 458.

The control logic provides means to obtain manual control over the syringe and includes a direction control NOR gate 460 which has two inputs, the first of which connects to the direction line 452 of the stepper control chip 430 and the second of which connects to a syringe direction invert line 462. The syringe direction invert line 462, although not shown, connects to the memory and logic circuitry 406 and is discussed in more detail below. The output of the direction control NOR gate 460 connects to the syringe motor driver 458, described below. Based on the signals entering the NOR gate 460 the syringe motor driver can be made to change the direction of the syringe stepper motor 142 (FIG. 1). Advantageously, the syringe motor 142 is bi-directional thereby providing means to draw liquid into the syringe or expel liquid from the syringe 120. The syringe direction invert signal may be provided, for example, in accordance with data contained in the static ram array 414 and thus may operate based on initial programming.

If the direction of the stepper chip 430 (FIG. 7) reverses direction, then the motion of the syringe plunger 118 (FIG. 1) also reverses direction. However, the values in the static ram array 414 may exist to ensure bi-directional printing, that is, the level of the signal on the direction invert line 462 changes when the direction of the stepper motor 123 changes.

Preferably, aspiration, dispensing and filling of the syringe 120 are all automatically controlled via the controller 114, associated software and user-defined inputs. Optionally, an operator may manually control the direction of the syringe 120 (FIG. 1) through the host CPU 402 via the direction invert line 462. Manual control over the syringe 120 (FIG. 1) provides the operator with the ability to aspirate, dispense or fill the syringe 120 on a non-automated basis, as needed or desired.

The syringe stop count circuit 408 (FIG. 7) also contains a syringe circuit counter 456. The syringe circuit counter 456 determines the number of pulses to be provided to the syringe motor during a discreet dispense operation. In the illustrated embodiment, the syringe circuit counter 456 has three inputs 465, 466, 467 and an output 464. The first input 465 accepts the syringe increment value from the static RAM array 414. The syringe increment value is the number of steps the syringe motor 142 (FIG. 1) will move at a particular target location. The second input 466 accepts the output of the divisor 422 from the memory and logic circuitry divisor 422. The divisor output acts as the main clock for the syringe circuitry counter 456 thereby synchronizing the counter's output to each rising pulse of the divisor output. The counter's third input 467 is a tap to monitor the pulses arriving at the syringe motor driver 458 and thereby count down the value at the counter. Thus, the syringe circuit counter 456 obtains a value from the data array, in this case the number of steps the syringe 120 is to increment, and in response to each upward edge of the main clock signal, provides an equal number of pulses to an output 454.

The output 454 (FIG. 7) of the counter 456 feeds to the three part logic network of the syringe stop count circuit 408. In general, the logic network synchronizes operation of the positive displacement pump 120 (FIG. 1) with the position stepper motor 123 and provides manual control, as needed, for a user to inhibit operation of the syringe. The logic network comprises a syringe override OR gate 470, an AND gate 471, and a syringe inhibitor AND gate 472. The syringe override OR 470 gate has a first input connected to the counter output 454 described above. The syringe override OR gate 470 has a second input connected to a syringe override signal line 474, which provides means to manually operate the syringe motor 142. The data array in the static RAM array 414 may provide the syringe override signal, or alternatively, in manual control mode, the host CPU 402 may provide the syringe override signal via the memory and logic circuitry 406.

The output of the syringe override OR gate 470 (FIG. 7) connects to a first input of an AND gate 471. The second input of the AND gate connects directly to the output of the stepper control chip 430. The AND gate 471 allows for syringe motor signal propagation from either the syringe override signal or, during automatic operation based on the values from the static ram array 414. The output of the AND gate 471 connects to a first input of a syringe inhibit AND gate 472. The second input to the syringe inhibit AND gate 472 comprises a syringe inhibit signal line 476, which provides means to cease operation of the syringe motor 142. The data array in the static RAM array 414 provides the syringe inhibit signal, or when the dispenser is under manual control, the host CPU 402 provides the syringe inhibit signal.

The output of the syringe inhibit AND gate 472 (FIG. 7) enters a syringe circuitry divisor 455. The divisor 455 is substantially identical to the divisor described above in the memory and logic circuitry 406, and thus is not described in detail again. The divisor 455 provides an output pulse for every N number of input pulses, when N determines the resolution of the system. The divisor 455 provides its output to the syringe circuitry counter 467 and the input of the syringe motor driver 458.

The syringe motor driver 458 (FIG. 7) operates substantially in accordance with the principles of the previously described axis motor driver 448 of the coordinate control circuitry 404 and therefore will not be repeated here.

### Valve Firing Circuit

Valve firing circuit 412 (FIG. 7) controls and synchronizes operation of the dispensing head 128 (FIG. 1) in coordination with the remaining subsystems of the dispensing apparatus 108 (FIG. 1). In this embodiment the valve firing circuit 412 comprises a valve pulse counter 480, a reference clock 482, and a valve driver 484. The valve firing circuit 412 obtains two input signals. The first input, from the memory and logic circuitry 406, comprises a valve pulse value from the static RAM array 414. The valve pulse value is the time or number of click cycles the valve is to remain open. The second input comprises the main clock pulse from the output of the memory and logic circuitry divisor 422. The main clock pulse serves to synchronize operation of the valve with the rest of the dispensing apparatus. The pulse counter 480 is responsible for providing the proper pulse duration to the valve driver 484.

Advantageously the valve firing circuitry includes a reference clock. The reference clock generates pulses of constant time duration. These pulses of constant time duration provide a known time reference on which the counter may base its operation. Since the valve pulse duration is in units of time, the reference clock 482 ensures accurate operation of the dispensing head or dispenser 128 (FIGS. 1 and 3).

The output of the pulse counter 480 (FIG. 7) connects to a valve driver 484. The valve driver 484 receives the logic level input from the pulse counter 480 and provides a driving voltage for driving a solenoid or other such device to open and close the valve 204 of the solenoid valve dispenser 128 (FIG. 3). Accordingly, the valve driver 484 electrically communicates with the solenoid valve dispenser 202.

### Software/Flow Charts Overview

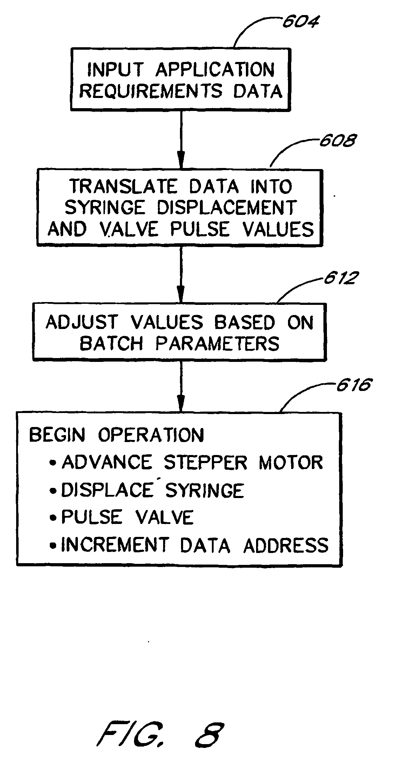

FIG. 8 is a simplified flow chart, in accordance with one embodiment, illustrating the basic operation of a dispenser apparatus and control system as described herein. The first step 604 typically comprises providing the reagent pattern and application requirements/parameters to the controller. As mentioned above, and discussed further below, the data is preferably provided or entered in the form of a text file, for example, in table format. Optionally, the data may be in graphic form in a bit map graphic file. The reagent application requirements define the location and amount and the application characteristics of the dispensing (and/or aspiration) process. This may be inputted by the operator via a keyboard or graphic interface or it may be loaded directly from a storage media, such as magnetic disk or tape. At the next step 608 the system translates the application requirements into syringe displacement and valve pulse duration values and arranges the calculated values in a data array.

An example of the type of data contained in the data array is shown below as TABLE 1. For example, the data array may contain data values which govern the manner in which reagent is dispensed at a particular target location. Thus, each data address corresponds to a target location and consequently each target location has a plurality of corresponding values which define the dispensing characteristics for that location. Of course, for the embodiments with multiple dispensers, similar tables are created for each dispenser.

**TABLE 1**

| DATA ADDRESS | 1 | 2 | 3 | 4 | 5 | 6 | 7 | 8 | ... |
|---|---|---|---|---|---|---|---|---|---|
| SYRINGE INCREMENT VALUE | | | | | | | | | |
| VALVE PULSE VALUE | | | | | | | | | |
| X AXIS DIRECTION | | | | | | | | | |
| Y AXIS DIRECTION | | | | | | | | | |
| X AXIS VELOCITY COMPENSATION | | | | | | | | | |
| Y AXIS VELOCITY COMPENSATION | | | | | | | | | |
| SYRINGE DIRECTION INVERT | | | | | | | | | |
| SYRINGE OVERRIDE | | | | | | | | | |
| SYRINGE INHIBIT | | | | | | | | | |
| VALVE OVERRIDE | | | | | | | | | |
| PULSE INHIBIT | | | | | | | | | |
| REAGENT TEMPERATURE COMPENSATION | | | | | | | | | |
| REAGENT VISCOSITY COMPENSATION | | | | | | | | | |

The syringe displacement value and the valve pulse value for each dispense location corresponds to an address in the data array. Thus, as the controller 114 (FIG. 1) moves the dispensing head 128 across the substrate 111, the address in the data array is sequentially incremented thereby progressing through the values in the data array. This provides precise control over the amount of reagent and the manner in which the reagent is provided to each location on the substrate 111. In one embodiment, all of this occurs simultaneously ("on-the-fly") with the continuous motion of the dispensing head as it travels across the substrate. In another embodiment, a "move-stop-dispense" approach is utilized. These and other different modes of operation are discussed in greater detail below.

Additional data manipulation may occur at step 612 in order to incorporate particular dispensing requirements, parameters or adjustments to aid in the reagent dispensing or aspirating process. Adjustments may include estimated adjustments for fluid viscosity, fluid temperature, dispensing apparatus configuration, substrate composition and other parameters. Adjustments may also include compensation for the velocity of dispensing head for X-axis and/or Y-axis travel. For example, in "on-the-fty" mode, if the dispensing head is moving at a high velocity, the pulsing of the valve and syringe must be phased slightly ahead of the desired dispensing location in order to hit the desired target area given the anticipated trajectory. Likewise, a more viscous liquid may require additional phase adjustments or an increase in the valve pulse time and the syringe increment distance so that the proper amount of reagent exits the valve.

Many of these adjustments may be determined through empirical studies and/or experimentally for a given reagent or production set-up. For example, rough adjustments can be made to the dispense data based on known or determined parametric equations or look-up tables in order to adjust for temperature, viscosity, height or speed of the dispensing head, etc. Finer adjustments can then be made experimentally for a given production set up. This can be done, for example, by programming the dispensing apparatus to dispense known patterns of crossing or parallel lines, target patterns and/or the like, at particular locations on the substrate. By inspecting the resulting patterns, certain adjustments, such as phase lead or lag, can be made to the dispense data to compensate for noted errors. The experiment can be repeated as many times as needed. Optionally, sensors may be provided, such as temperature probes, viscosity sensing devices or other sensor devices, in order to provide real time automated feedback and adjustment of the dispenser.

Finally, at step 616, the controller aligns the reagent dispensing head in its starting position. When the dispensing apparatus begins operation, the dispensing head 128 traverses the substrate. Concurrently, the controller 114 (FIG. 1) increments the syringe 120 (FIG. 1), pulses the solenoid valve dispenser 128 (FIGS. 1 and 3) and successively increments the data array address to provide precision reagent dispensing.

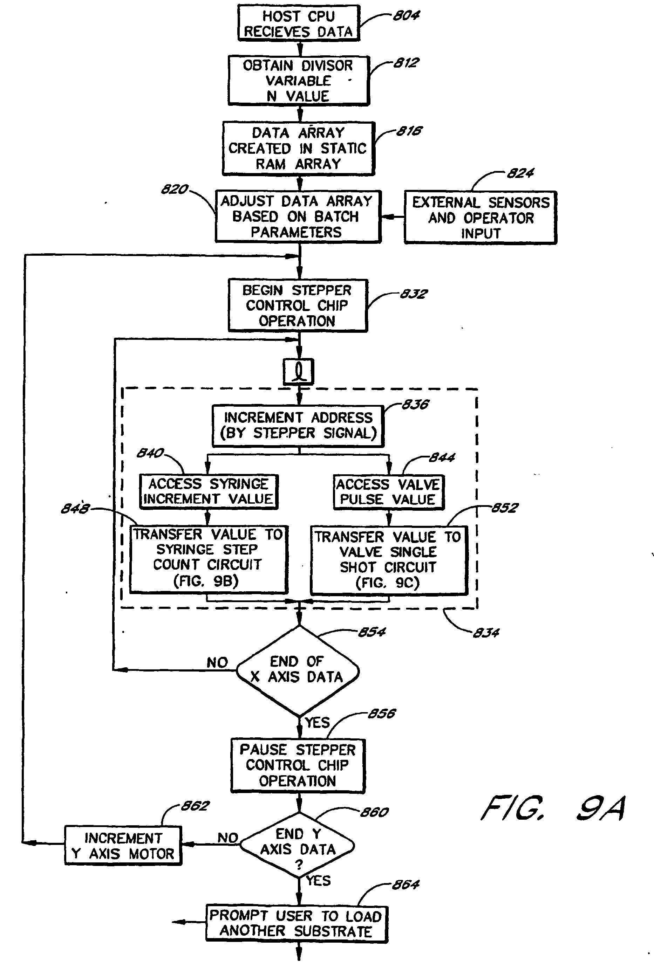

FIG. 9A is a flow chart illustrating, in more detail, one preferred dispensing mode of operation of a dispenser apparatus in accordance with one embodiment. At step 804, the host CPU 402 (FIG. 7) receives data which governs the dispensing for a particular reagent and dispensing operation. A keyboard, hard drive, diskette, CD-R0M, or other data entry device may provide this information to the host CPU 402. The host CPU 402 or controller 114 also receives the value by which the main clock signal will be divided (represented above by the letter N), step 812. This generally determines the resolution of the dispensing operation in terms of the number of addressable target areas per linear distance "d".

At step 816 (FIG. 9A) the host CPU 402 transfers the dispensing data to the static RAM array 414 (FIG. 7) of the electronic controller. The host CPU 402 in conjunction with the static RAM array 414 places the data into a data array. The data array contains the dispensing data for each target location 706 (FIG. 3) and is accessed via a data address location. The data array may also contain specific control information such as syringe inhibit, syringe override, valve inhibit, valve override and stepper motor direction, if such information is applicable, and/or various adjustments.

At step 824 (FIG. 9A), the system controller 114 monitors the external sensors and/or operator input. Monitoring the external sensors may reveal additional information such as fluid viscosity and/or temperature. Based on the data from the external sensors and any final changes from the operator, the controller 114 adjusts the data array at step 820. For example, if the reagent is determined to be of higher than normal temperature, the valve duly cycle may be adjusted downward to ensure the proper amount of reagent is expelled.

At step 832 (FIG. 9A), the stepper control chip 430 (FIG. 7) begins operation by outputting a series of pulses. The stepper control chip 430, or some other equivalent output device provides a pulse to the X axis driver 448 (FIG. 7) thereby actuating the X-axis stepper motor 123 (FIG. 1) which continuously moves the dispensing head 128 (FIG. 1) across the substrate 111. In the present embodiment the dispensing head 128 (FIG. 1), assumes a site of continual steady-state motion because of the high definition of the steps. In this particular embodiment the divided stepper control chip output pulses serve as the main clock for the controller 114 of FIG. 7. However, other types of system synchronizers exist and are known by those of ordinary skill in the art. For example, if the invention claimed herein is embodied using computer software, the main computer clock or a divided version thereof may serve as the synchronizing signal.

Next the operation of the controller 114 branches and loops, as represented by the section 834 (FIG. 9A) enclosed within the dashed line. Within the loop, the system performs several functions simultaneously, namely moving of the dispensing head 128, incrementing the syringe 120, and opening/closing the valve 204 (FIGS 1 and 3). To accomplish this task the output of the stepper chip 430 (FIG. 7) increments the address of the data array at which data is stored, step 836. This provides for automated and sequential access to the data values in the data array. Desirably, the data in the data array may be arranged to cause the system 108 to dispense reagent 130 in a desired pattern, be it sequential or non-sequential, contiguous or non-contiguous. Thus, the dispensing head 128 would only dispense reagent at the specific target locations on the substrate 111 indicated by the dispense data contained in the data array.

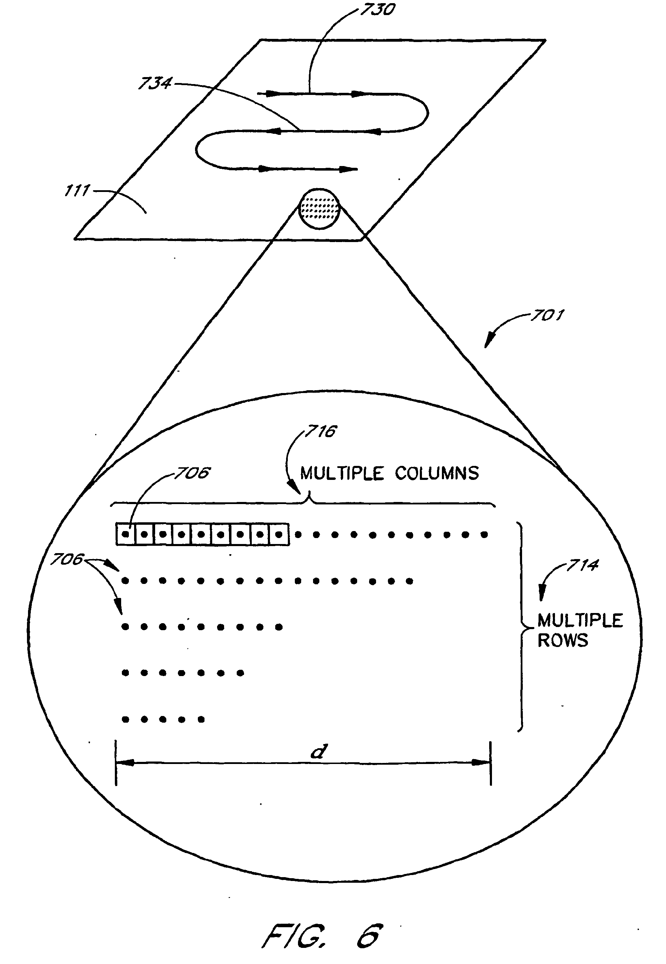

The multiplexer 426 (FIG. 7) and miscellaneous registers and logic (FIG. 7) access the syringe increment value 840 and the valve pulse value 844. These values are stored in the static ram array 414 (FIG. 7) and define how the syringe 120 will move and how long the valve 204 (FIG. 3) will remain open for a particular target location 706 (FIG. 6). The syringe increment value is then transferred to a syringe stop count circuit, step 848. Simultaneously, the valve pulse value is transferred to a valve firing circuit, step 852. The sub-routines performed by these circuits control the operation of the syringe 120 and valve 128 (both shown in FIG. 1) respectively. The operation of the syringe stop count circuit 848 and the valve firing circuit 852 are described below in more detail.

After the operation of the syringe stop count circuit 848 and the valve firing circuit 852, the controller 114 queries for additional X axis data at step 854. If additional X axis data exists the system returns to step 836 to increment the address of the data array and repeat the above-described process. Conversely, if no additional data exist for a particular row, the controller 114 pauses the stepper control chip output, step 856, and queries whether additional rows of reagent 130 need to be dispensed, step 860. If data corresponding to additional rows exists in the data array, then the system increments the Y axis motor to thereby advance the dispensing head 128 (FIG. 1) one row, step 862, and returns to step 828 to dispense another row of reagent 130.

If no additional data items exist, i.e. the last X location on the last row has been dispensed, then the controller 114 stops operation. The operator may then load another substrate 111, step 864, and repeat the dispensing process or input another dispensing pattern via the host CPU 402. Alternatively, the dispensing apparatus 108 (FIG. 1), if equipped with an automatic substrate feed (not shown), may automatically load another substrate 111 upon completion of the process.

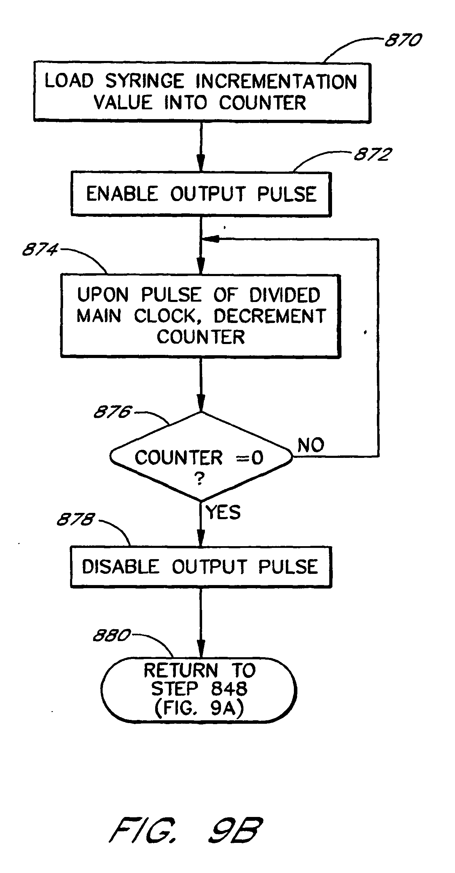

FIG. 9B illustrates, in more detail, the operation of the syringe stop count circuit 408 (FIG. 7) in accordance with one embodiment. The syringe stop count circuit 408, shown in hardware in FIG. 7, controls the operation of the syringe 120 based on the values in the data array and the operation of the rest of the controller 114. In operation, the syringe increment value, obtained from the data array, loads into the syringe counter 456 (FIG. 7), step 870. If the syringe increment value is a non-zero value, the output of the counter 456 goes high to thereby enable the operation of the syringe driver, step 872. Each clock pulse of the divided stepper chip output 450 (FIG. 7) simultaneously increments the syringe 120 and decrements the counter 456, step 874. In this repeating fashion, the syringe plunger 118 (FIG.1) moves or advances to thereby increase the pressure in the line 150 (FIG. 1).

At step 876 (FIG. 9B) the controller or host CPU queries the status of the counter 456. If the value of the counter has not reached zero, then the syringe stop count circuit 408 (FIG. 7) maintains the state of the counter output, in one embodiment high or enabled. As a result, the syringe 120 increments on the next divided main clock pulse and the counter decrements, step 874. Alternatively, if the query step determines that the counter value is zero, the output of the counter 456 is disabled, step 878, which in turn halts the advancement of the syringe 120. This completes the operation of the syringe for a particular target location. The operation of the controller 114 returns to FIG. 9A. The above described process repeats for each target location 706 (FIG. 6) on the substrate 111.

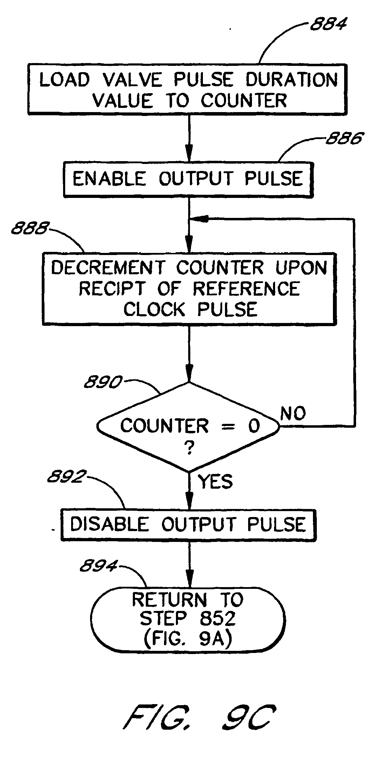

FIG. 9C illustrates, in more detail, the operation of the valve firing circuit 412 (FIG. 7) in accordance with one embodiment. The dashed line 412, valve firing circuit 412, shown in hardware in FIG. 7, comprises the hardware enclosed by the dashed line. In operation, the transferred valve pulse value loads into the valve counter 480 (FIG. 7), step 884. If the valve pulse duration is a non-zero value, the output of the counter 480 goes high to thereby enable the operation of the valve driver 484 (FIG. 7), shown at step 886.

In one embodiment, the valve pulse counter 480 (FIG. 7) operates in relation to a reference clock 482 (FIG. 7) to establish the reference period for the valve operation in units of time instead of number of pulses of the stepper control chip 430 (FIG. 7). Thus, the data array provides information on how many reference clock pulses the valve 204 (FIG. 3) will remain open, which corresponds to a period of time and not the distance traveled by the X-axis stepper motor 123 (FIG. 1). For example, if each clock pulse lasts 0.001 seconds, then programming the valve to remain open for 100 reference clock pulses will result in the valve remaining open for 0.1 seconds or 1/10 of a second.

The valve firing circuit 412 (FIG. 7) decrements the counter 480 on the next rising edge of the reference clock, step 888 (FIG. 9C). This completes one clock cycle. Next, at step 890, a query is made regarding the status of the counter. If the value of the counter 480 is non-zero, the valve firing circuit 412 maintains the state of the counter output, that is, high or valve open. As a result, the valve 204 (FIGS 1 and 3) remains open and the counter 480 decrements on the next rising edge of the reference clock pulse, step 888.

Alternatively, if the query step 890 (FIG. 9C) determines that the counter value equals zero, the output of the counter 480 (FIG. 7) is disabled, step 892, which in turn disables the driver 484 (FIG. 7) and causes the valve 204 to close. This completes the valve operation for a particular target location 706. The operation of the system progresses in the fashion described in FIG. 9A step 894. The above described process repeats for each target location 706 (FIG. 6) on substrate 111.

In one embodiment, the invention may be configured to perform selective reagent dispensing operations. For example, instead of configuring the system 108 for continuous linear motion of the dispensing head 128, the system can also provide for random access addressing of substrate target areas. Thus, the dispensing apparatus 108 could, for example, dispense reagent at the upper right hand corner of a substrate 111 and then move to the lower left hand corner and dispense reagent without necessarily dispensing at any locations therebetween. The order and pattern of dispensing is preferably automatically controlled via the data array or optionally manually through the host CPU 402 (FIG. 7). An operator would configure the data array values to create a desired pattern of dispensed reagent 130. This pattern could provide, for example, a symbolic or textual representation indicating the test result, or form a visible brand or trade name on the substrate 111.

Optionally, one embodiment of the invention may be configured, for example, in a software based system where one or more EPROMs could store the computer code. Each EPROM could connect to one or more microprocessors each of which would connect to one or more drivers to provide the appropriate signal to each electromechanical device.

A dispensing apparatus constructed in accordance with one embodiment may also be mounted on any one of a number of other types of membrane placement and handling modules. Such dispensing platforms may be microprocessor-based and are preferably controlled through an industry standard input/output I-0 controller (not shown), such as an RS232 interface. The dispensing apparatus may also be well suited for use with individual membrane strip handling modules and continuous reel-to-reel handling modules. For example, an individual membrane strip module may incorporate only X-axis table motion for dispensing. The reel-to-reel platform may incorporate a constant-speed membrane transport with optional mountings attached for motion of one or more dispensers. A drying oven (not shown) may also be used with any of the described embodiments to increase production throughput, as desired.

### Use and Operation (Some Examples)

FIG. 6 shows a schematic view of a substrate 111, including an enlarged view illustrating how individual "dots" or droplets 702 might preferably be arranged on the substrate 111. Conceptually, the substrate 111 is divided into rows (X-axis) 714 and columns (Y axis) 716 having a predetermined resolution in terms of a number of addressable target areas 706 per linear distance "d". Thus, a linear distance d equal to one inch (2.54 cm) of substrate 111 traveling along one axis may, for example, contain 100-500 or more individually addressable target locations. Each target location would correspond to a number of X-axis stepper motor increments and a number of Y-axis stepper motor increments relative to a predetermined "zero" position.

Because each target location 706 has a unique address, a controller is able to precisely select particular target location(s) in which to dispense predetermined quantities or droplets of reagent. FIG. 6 illustrates one preferred pattern of dispensing motion in relation to the substrate 111. This pattern advantageously decreases the time to complete a particular dispensing operation. Upon executing a first linear pass 730 along a first row, the dispensing head reverses direction and executes a second pass 734 along an adjacent second row. Such bi-directional dispensing advantageously decreases the time required to complete a dispensing operation in comparison to a unidirectional dispensing operation. It is also envisioned that for non-sequential or intermittent dispensing the controller would speed operation by dispatching the dispensing head directly to or adjacent the next desired target location without necessarily completing each successive pass or each intervening row.

### Example 1. Programmed Line Mode

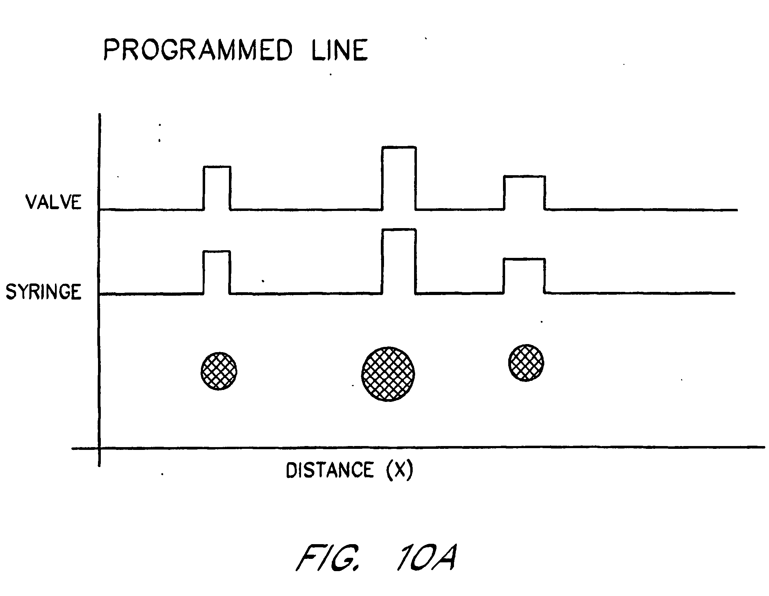

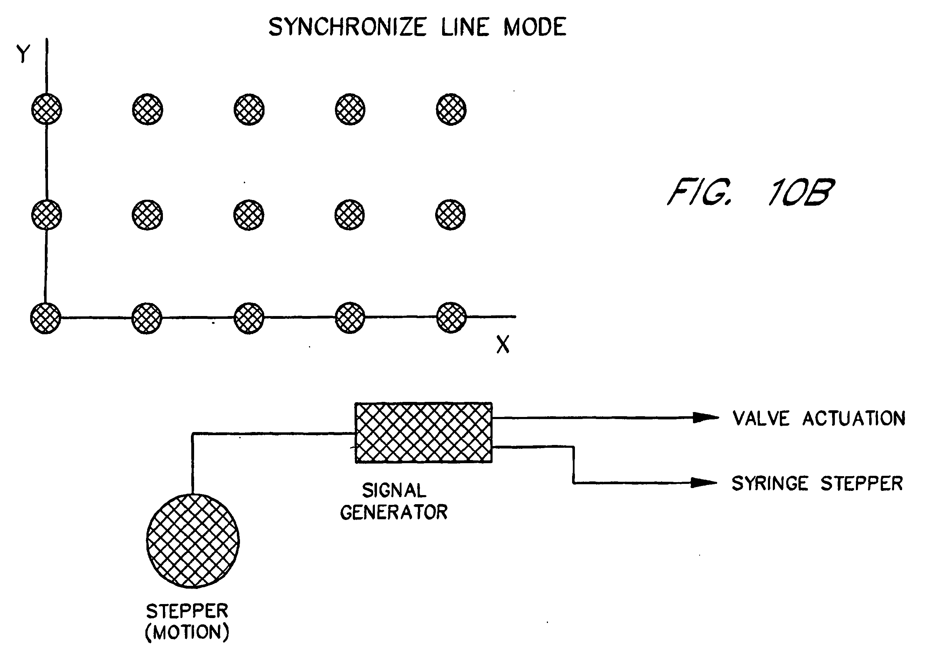

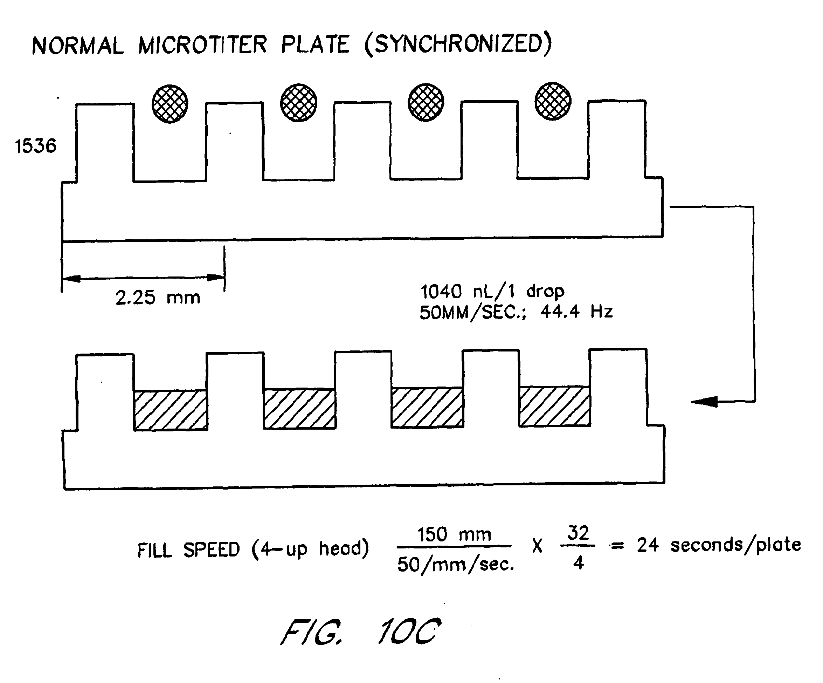

FIG. 10A is a schematic drawing illustrating a programmed line mode of dispense operation in accordance with one embodiment of the invention. In this mode, individual dots of the same or different amounts of fluid may be dispensed at different positions along a linear or non-linear path. The individual dots may or may not be colinear or evenly spaced, as desired. They may be spaced or offset from one another by a desired amount of spacing. This mode of operation may be useful, for example, for creating custom dot array patterns on a membrane or glass slide.

### Example 2 - Synchronized Line Mode

FIG. 10B is a schematic drawing illustrating a synchronized mode of line dispense operation in accordance with one embodiment of the invention, such as for creating high-density dot arrays on a membrane or glass slide. This mode of dispense operation is particularly suited for dispensing reagent or other fluids into a conventional well plate array, such as illustrated in FIG. 10C, using either a single or multi-head dispenser. For example, a standard 96-well (8 x 12) well plate may be filled using a multi-head dispenser having a 1 x 8 dispense head array. The dispenser would dispense 8 parallel lines of 12 drops each with a spacing of 9 mm between drops and a line length of 99 mm. For a 1536-well (32 x 48) well plate array the same dispenser could be used to dispense 8 parallel lines of 48 drops each with a spacing of 2.25 mm between drops and a line length of 105.75 mm. The line pattern would be repeated 4 times to fill the well plate.

The same dispense mode could also be used to dispense droplet patterns onto an electronic biosensor array. These are usually fabricated using printed arrays of sensors or electrodes on a substrate. In this case the reagent is dispensed so as to match the sensor pattern. Again this can be done using a line mode similar to the case of the conventional micro-well plate as described above.

### Example 3 - Non-synchronized Line Mode

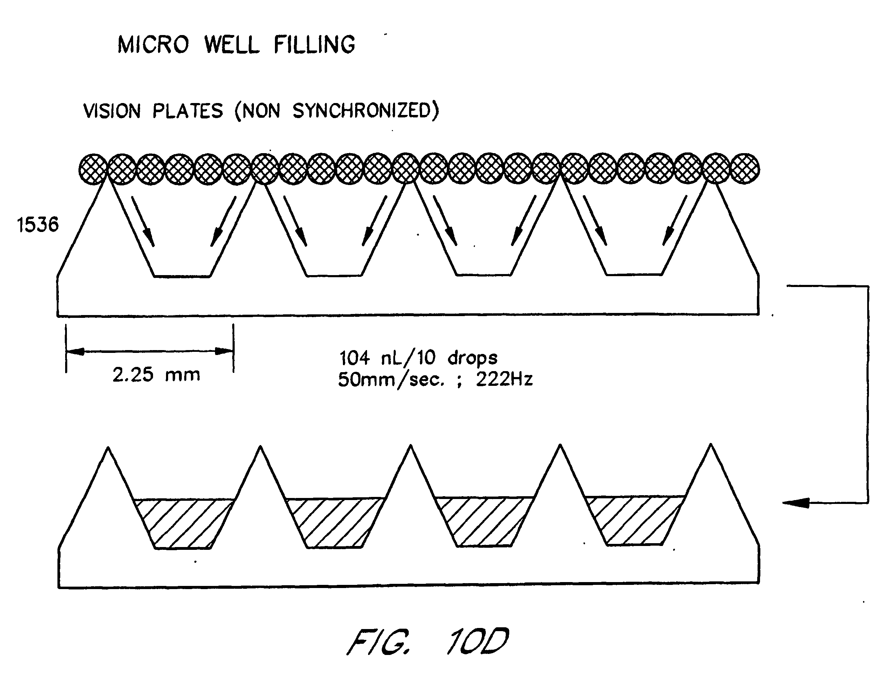

FIG. 10D is a schematic drawing illustrating a non-synchronized mode of line dispense operation in accordance with one embodiment of the invention such as for creating continuous uniform lines on a flat substrate or for filling wells in a vision micro-well plate. A vision micro-well plate uses wells having an angular apex that separates each well. When dispensing a uniform continuous line of reagent the individual drops roll off the apex into the adjacent wells thus giving statistically accurate and even filling of wells.

In the non-synchronized mode of line dispense operation the valve dispense head and syringe pump operate at some harmonic of the motion stepper to produce a series of drops. For every N steps of the motion stepper one drop is dispensed. For example, if the motion stepper has a resolution of about 2 microns and the syringe pump has a resolution of 192,000 steps per full stroke then to dispense a 20.8 nl drop every 0.5 mm using a 100 uL syringe then N = 250 and M = 40. Therefore, the amount of droplets dispensed per unit of linear motion can be precisely controlled. For simultaneous X and Y motion, such as for forming a diagonal line, fairly simple adjustments can be made to the dispensing frequency to ensure the desired number of drops per unit of linear distance.

### Example 4 - Dot Array Mapping

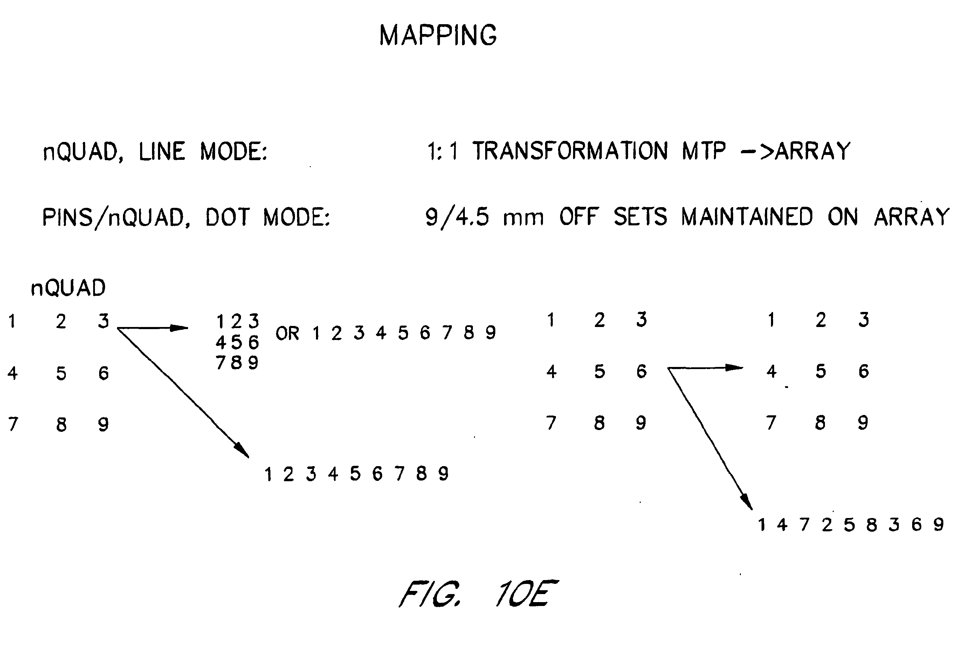

FIG. 10E is a schematic drawing illustrating one mode of dot array mapping in accordance with one embodiment of the invention. For example, it is often desirable to map (replicate or transform) one or more microplate arrays into a high density array on a membrane or glass slide. For instance, one could map sixteen 96-well well plates having 9 mm center-to-center well spacings into a single 1536 dot array having center-to-center spacings in the range of 100-1000 microns.

This task can be accomplished several ways using the invention disclosed herein. One example would be to successively operate one head at a time of a 8-head dispenser with 9 mm center-to-center head spacing using a synchronous line dispense mode with a large spacing between drops. For example, a common substrate is a standard 25 x 76 mm microscope slide. One can array 50 glass slides on an X-Y table and operate each of the 8 heads in succession to produce drops with a spacing in the range of 25 mm on each slide at the same position. The other 7 heads can be operated in linear succession with small offsets to produce an array of 8 dots on the glass slides with a small separation of between about 100-1000 microns between dots. Note that this operation can be done using one head at a time or, more preferably, using all 8 heads dispensing in rapid succession with small time delays to provide the desired linear spacing. By repeating this function for all sixteen plates and using suitable offsets one can map the sixteen well plates into a single 1526 array on each glass slide. In this case the map would be a miniaturized replica of each 96 well plate located in a 4x4 array.

The dispenser can also be programmed so as to transform one or more well plate arrays into a new or different high or low density array. For example, a series of two dimensional arrays may be transformed into rows or columns of a larger high-density array, or arrays may be transposed or inverted. Direct 1:1 mapping can also be achieved by operating the dispense heads in parallel synchronous line mode to produce 8 drops on each slide with a spacing of 9 mm. Other modes and variations for the use and operation of the invention will be apparent to those skilled in the art.

### Text File Control and Software

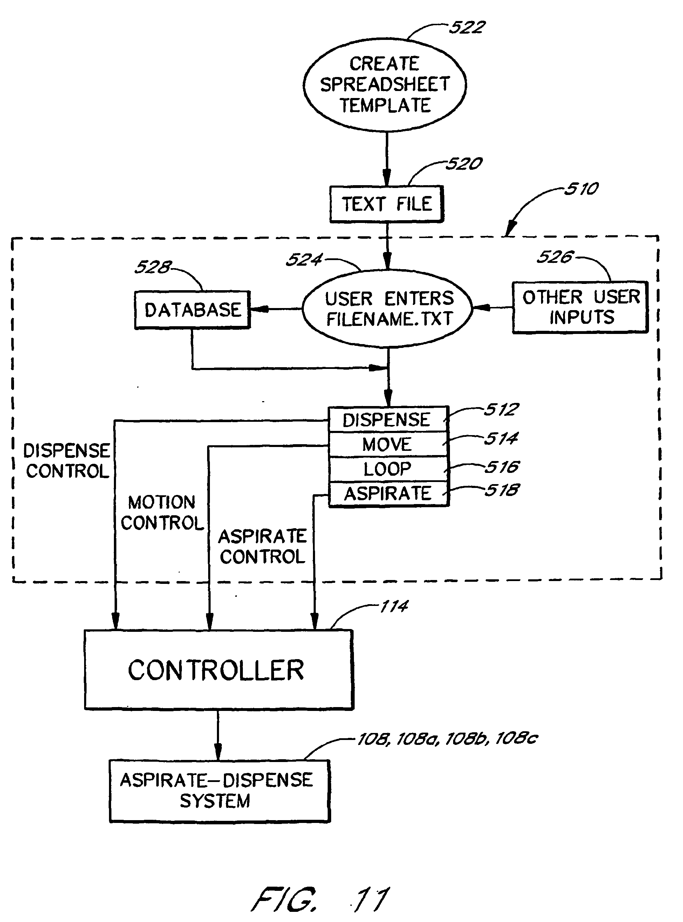

The software to control the aspirate-dispense systems 108 (FIG. 1), 108a (FIG. 2A), 108b (FIG. 2B) and 108c (FIG. 2C) may be designed in a wide variety of manners. In one embodiment, the dispense, aspirate and motion control software 510 (FIG. 11) utilizes AxSys software as available from Cartesian Technologies, Inc. of Irvine California.

In brief, the software 510 executes a series of actions or functions for moving the dispense head 128 (FIG. 1) or multiple dispense heads 128 as shown in FIGS. 2A-2C to dispense (and/or aspirate) user-defined volumes of one or more reagents or other liquids. These actions are programmed by the user entering in the volume and coordinates for the dispense (or aspirate) operation(s).

For example, if the user wishes to dispense 100 nanoliters (nL) at location X = 25 mm, Y = 38 mm, Z = 20 mm, the volume is entered into a Dispense action or function 512 (FIG.11) and the coordinates into a Move action or function 514 (FIG. 11). For looped operations, such as multiple dispense locations, a Loop action or function 516 (FIG. 11) is provided. Also, for aspirate operations the software 510 has an Aspirate action or function 518 (FIG. 11). These actions contain suitable computer codes or programs so that the software program 510 can provide the controller 114 with appropriate instructions or commands.

Simple operations may be manually operated by the user through the software 510. However, for enhanced speed and complex dispensing and/or aspirating operations, such as those involving multiple reagents which are to be combined in multiple formats, it is preferable to provide a user-defined text file 520 (FIG. 11) containing, for example, a list of dispense volumes and corresponding (X, Y, Z) coordinates. This text file format is advantageous for many applications, for example, if the user has 8 different reagents that are to be dispensed in 32,000 different combinations.

Text files are typically ASCII or similarly encoded files, as known in the art. Such an encoding system is a convenient way for a computer to handle data while processing the text file. A text file "word" is typically a sequence of characters ending with one or more "word terminators" such as spaces, tabs, commas, periods and carriage returns, among others.

Preferably, the text file 520 is a white space delimited text file containing lists of numbers. The white space can comprise one or more tabs, spaces or carriage returns though other suitable characters may be used with efficacy. The numbers in the text file 520 are the source of operational parameters/requirements, for example, dispense volumes, XYZ position and loop control.

Depending on the particular application, the user first generates a spreadsheet template or a spreadsheet of values to be used by the software 520 (FIG.11). This step is labeled 522 in FIG.11. The spreadsheet may be generated by a number of commercially available software packages, such as Microsoft Excel and the like, or other customized software.

The spreadsheet contains information such as dispense and/or aspirate volumes and corresponding coordinates. The user then saves the spreadsheet, preferably in the form of a tab delimited text file 520 (FIG. 11) such as "FILENAME.TXT". This file name is entered by the user (step 524 in FIG. 11) when running the software 510. More than one text file may be used, for instance, different files may be created for access by Aspirate, Dispense, Move and/or Loop actions. Moreover, the spreadsheet itself may be in the form of a text file or other similar and/or compatible format, and hence may be directly input into the program 510.

When the software 510 (FIG. 11) is run, the file 520 is read by the program 510. In one embodiment, the values from the text file 520 are accessed or read sequentially and corresponding operations performed sequentially. In another embodiment, the values from the text file 520 are accessed or read in a substantially parallel (simultaneous) manner and corresponding operations performed substantially parallely (simultaneously). In yet another embodiment, the values from the text file 520 are accessed or read and then stored in memory to create a database 528 (FIG. 11), possibly, with other operational parameters or characteristics of the particular dispensing system.

In one example, the software 510 (FIG. 11) allows a dispensing system with an array of dispensing heads 128 (FIGS. 2A-2C) to be indexed in a manner where each head 128 would be able to dispense into each individual well of a microtiter plate. Preferably, and as discussed further below, within the program 510 are established one or more user-defined predetermined programmable dispense drop volumes (V_{d1}, V_{d2}, V_{d3}, ... V_{dn}), say V_{d1} is 100 nL in this case, which cumulatively form the total volume (Vₜₒₜₐₗ) to be dispensed at a particular location. Thus, the independent variable is the number of drops (N_{drop}), of volume 100 nL in this example, to be dispensed at each well location by each of the 1 x 8 dispensing heads 128 to achieve the total volume at each location. That is, N_{drop} is equal to Vₜₒₜₐₗ divided by V_{d1}.

In this example, the use of a text file provides a method to list the desired volumes of each reagent of the 1 x 8 array to be dispensed into each of the microtiter plate wells. The text file 520 (FIG. 11) is linked to the program 510 in a manner that as each of the 1 x 8 dispense heads 128 (FIGS. 2A-2C) is indexed over a specific well it reads the required volume from the text file 520 and proceeds to dispense this volume in terms of the number of drops required to for the indicated volume. The number of drops is determined by dividing the total volume by the drop size.

Advantageously, the use of text files provides a means which adds to the versatility and efficiency of dispensing (and/or aspiration) functions. As indicated above, these text files are lists of numbers that can be generated from spreadsheet programs. The text file data is used to control the looping structure of the program, the locations of the dispense head, and the volumes dispensed (and/or aspirated). For example, spreadsheet formulas can be used to generate a list of dispense volumes and XYZ coordinates. This list is preferably saved as a tab-delimited text file. From within the program 510 (FIG. 11), instead of the user specifying volumes, the user specifies the file name for list of volumes which the program 510 reads in a coordinated fashion and instructs the controller 114 accordingly, for example, to implement motion and dispense control of the system, for instance, as described above in connection with FIGS. 7, 8 and 9A-9C and TABLE 1.

Text file control may be employed with any of the embodiments disclosed, taught or suggested herein. In general, this technology provides the ability to dispense programmed drop volumes in a quantitative format using a hydraulic coupling between a syringe pump 120 (FIGS. 1, 2A-2C and 4) and a micro solenoid valve 128 (FIGS. 1, 2A-2C and 3). Several modes and approaches of dispensing are described herein above and further below. All of these can be controlled by information provided through one or more text files input into software interfaced with a controller to provide high-speed precision dispensing and overall operation.

In one dispensing mode, a step and repeat motion approach (move-stop-dispense-move) is used to dispense a single drop of a programmed value, for example, 100 nL. This can be done individually or in parallel with an (M x N) dispense head array (FIGS. 2A-2C), for example, a 1 x 8 dispense head array.

In another dispensing mode, the step and repeat motion approach is performed using high speed "bursts" of drops of a given size, for example, 100 drops with a volume of 100 nL at a frequency of 200 Hz.

In yet another dispensing mode, an "on the fly" approach is used, for example, to dispense arrays of reagent(s). In this case, each dispense head 128 (FIGS. 1 and 2A-2C) can dispense a given drop size with a programmed pitch, or distance between drops. The drop volume, pitch and number of drops (length of line) can all be individually programmed.

One advantage of using text file control in conjunction with the aspirate-dispense systems and operations of the embodiments herein is that complex patterns of dispense location and volume can be easily achieved through, for example, a spreadsheet template. This is useful for "combinatorial" dispensing applications where "n" numbers of reagents are combined in different reagent and/or volume ratio combinations. Desirably, the user can custom design the combinatorial experiment using the text file (and/or spreadsheet format) and then easily download the experiment to the software 510 (FIG. 11) for execution.

Another advantage is that a wide dynamic range of volumes can be easily programmed using small volume increments. For example, a 20 nL dispense volume increment can be used in a spreadsheet template to generate a list of dispense volumes in a text file from 20 nL up to 20 µL, with 20 µL resolution. These larger volumes can be rapidly dispensed, for instance, in less than 10 seconds. In addition, the range of volumes from 20 µL to 200 µL can be dispensed using, for example, 200 nL dispense volume increments, that is, droplet sizes.

The software 510 (FIG. 11) can be utilized in several ways to dispense a desired programmed volume at a predetermined location. One embodiment utilizes the "burst' mode where a volume is read from the text file 520 (or spreadsheet) and the software 510 converts that into an appropriate number of drops and dispenses the drops at a frequency specified by the program channel parameters. This frequency can be user-defined and independently controlled in a range from about 1 Hertz (Hz) to over about 500-1000 Hz. The maximum frequency in the "burst" mode is generally limited to the frequency at which the micro-solenoid valve 203 (FIG. 3) will fully close.

In another embodiment, a "nested do loop" within the software 510 (FIG. 11) is utilized with zero X-Y displacement between well (or location) movements, that is, the dispense head 128 is stationary during the execution of the loop. In this case, the software 510 dispenses the same drop volume each loop. The number of loops times the drop size provides the volume specified by the text file 520 (or spreadsheet). In this case, the frequency is typically in the range of 5-10 Hz, though it may be lower or higher.

For example, in the case of a micro-well plate, a given well can receive reagents of a specified volume, each with a resolution of down to 5 nL. Advantageously, the user can program the desired resolution in terms of drop size to achieve the required precision of compositional mixing. An example is provided below in TABLE 2 for a total well volume of 100 µL.

**TABLE 2 (Well C5: 100 µL)**

| | **Volume** | **Drop Size** | **Resolution** |
|---|---|---|---|
| Reagent 1: | 80 µL | 200 nL | 0.2% |
| Reagent 2: | 0 | | |
| Reagent 3: | 17 µL | 50 nL | 0.05% |
| Reagent 4: | 2 µL | 5 nL | 0.005% |
| Reagent 5: | 0 | | |
| Reagent 6: | .8 µL | 5 nL | 0.005% |
| Reagent 7: | .19 µL | 5 nL | 0.005% |
| Reagent 8: | .01 µL | 5 nL | 0.005% |

Referring to TABLE 2, using burst frequencies in the range of 200 Hz, the total fill time for well C5 with the recipe of TABLE 2 is about 5-6 seconds. Advantageously, the high resolution provides the ability to easily and rapidly explore the effects of very small additions to the total reagent mix. An example application would be to investigate the use of small additions of polymers and/or surfactants to protein based solutions where the additions are in the range of 0.5% or less.

It should further be noted in general, and in specific reference to TABLE 2, that excellent absolute volume precision is obtained due to the use of a positive displacement volume control system using the pump 120 (FIGS. 1, 2A-2C and 4) in combination with the dispenser 128 (FIGS. 1, 2A-2C and 3). Moreover, the large number of droplets with associated kinetic energy provide for good reagent mixing in the well or other target location. Additional, splashing can be minimized by controlling the drop size relative to the fill volume. Small drops dispensed in a large volume result in little, negligible or no splashing.

### Text File Examples

The text file 520 (FIG. 11) typically contains data to control the locations of the dispense head(s) 128 (FIGS. 1, 2A-2C), the corresponding volumes to be dispensed (and/or aspirated), the looping structure of the program 510 (FIG. 11) and other associated and/or related values, parameters or system and application requirements. These associated values, parameters or system and application requirements may also be input independently by the user into the software 510, as generally labeled 526 in FIG. 11. For example, these may include incremental dispense volumes V_{d1}, V_{d2}, V_{d3}, ... V_{dn} referred to earlier and also discussed further below, and the geometric configuration and/or spacing of an array of dispenser heads 128 (FIGS. 2A-2C).

Some examples, without limitation, of typical text files that can be utilized by the dispensing and aspirating systems of the embodiments disclosed herein are presented next. Of course, it should be understood that these text files are merely exemplary and other suitable and/or modified text files may be efficaciously used, as needed or desired.

### Volume and Move Control:

This simple example moves a single channel dispenser 128 (FIG. 1) to four locations and dispenses 50 nl (0.05 µL) to each location. The first row of the TEXT FILE A contains the XYZ coordinates, the second row contains the dispense volume. This is repeated for the additional dispenses.

**TEXT FILE A**

| | | |
|---|---|---|
| 20.5 | 55.8 | 10.4 |
| 0.05 | | |
| 37.8 | 50.4 | 10.4 |
| 0.05 | | |
| 45.6 | 38.2 | 12 |
| 0.05 | | |
| 85.7 | 65.4 | 11 |
| 0.05 | | |

In this particular example, the software 510 (FIG. 11) is programmed with a four pass Loop action 516 containing a Move action 514 and a Dispense action 512. With each pass through the loop, the Move action 514 reads the X, Y and Z values from the TEXT FILE A and instructs the controller 114 to move the dispensing head 128 (FIG. 1) to those coordinates. The Dispense action 512 reads the dispense volume, and accordingly instructs the controller 114 to dispense the required volume via actuations of the pump 120 and dispenser 128, as discussed herein.

### Loop Control for Complex Volume Dispenses:

As discussed earlier, preferably, dispensing operations are performed at a predetermined steady-state pressure. Typically, for a given fluid this steady state pressure is related to the droplet volume, that is, the steady state pressure has a different optimum value for a different desired droplet dispense volume. Also, as indicated before, the system pressure can be adjusted by advancing or retarding the syringe plunger 118 (FIG. 1) with the valve 204 (FIG. 1) closed or by pre-dispensing to raise or lower the pressure, as needed or desired. Stated differently, each dispense head or channel 128 (FIGS. 1 and 2A-2C) may have to be prepared for dispensing a specific drop size. In some cases, this pressure adjustment can be time consuming and slow down the overall process efficiency.

Preferably, and as also stated above, to dispense different volumes with text file control, a single predefined volume is repeated to achieve the desired total volume. For example, to dispense 40 nL, 100 nL and 300 nL, a dispense volume of 20 nL is dispensed twice, five times, and 15 times, respectively. Advantageously, this approach is extremely useful when using text files to dispense a wide range of volumes. In this particular example, instead of the text file 520 (FIG. 11) containing the volume to be dispensed, it contains the number of repeats for the integral dispense volume (for example, 20 nL in the above example).
In the following example, an 8-channel dispenser (FIGS 2A-2C) will dispense volumes from 0.2 µL to 5.0 µL to the 24 columns of a 384 micro-well plate. This dispensing recipe is shown below in TABLE 3:

**TABLE 3**

| Column | Volume (µL) |
|---|---|
| 1 | 0.2 |
| 2 | 0.4 |
| 3 | 0.6 |
| 4 | 0.8 |
| 5 | 1 |
| 6 | 1.2 |
| 7 | 1.4 |
| 8 | 1.6 |
| 9 | 1.8 |
| ! | ! |
| ! | ! |
| 23 | 4.6 |
| 24 | 5 |

To dispense the volumes of TABLE 3, in this example, the total volume in each well is composed of a series of drops using two incremental or integral droplet volumes, for instance 0.1 µL and 1 µL. In this case, a user-defined TEXT FILE B is created as follows (only a portion of the file is shown):

**TEXT FILE B**

| | | | | | | | | | | |
|---|---|---|---|---|---|---|---|---|---|---|
| 2 | 2 | 4 | 4 | 6 | 6 | ... | 6 | 6 | 0 | 0 |
| 0 | 0 | 0 | 0 | 0 | 0 | ... | 4 | 4 | 5 | 5 |

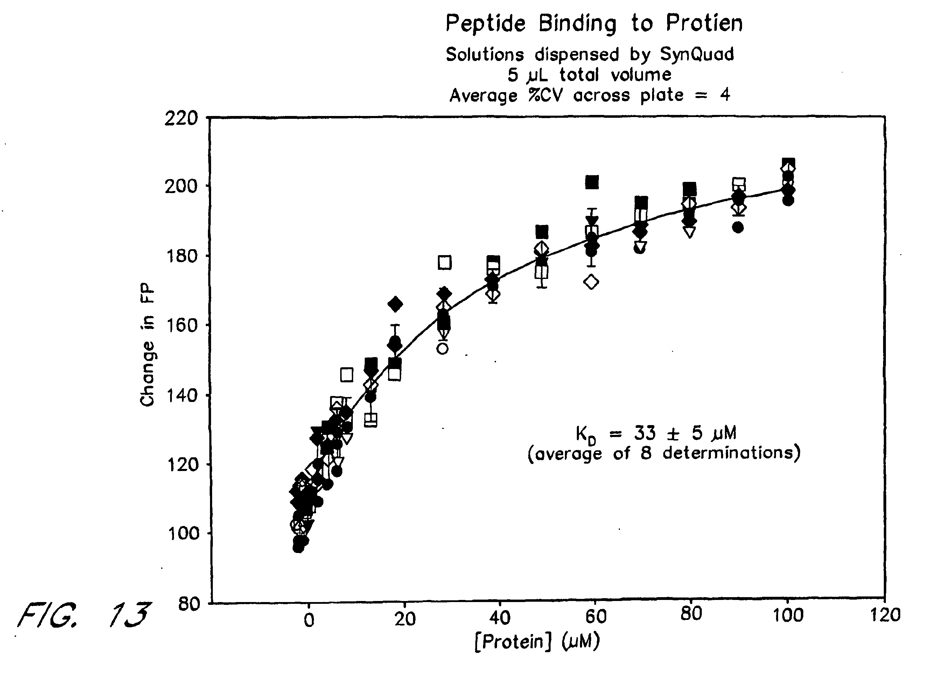

The first row in TEXT FILE B specifies the number of 0.1 µL drops whereas the second row specifies the number 1 µL drops (the numbers are duplicated because the 8-channel dispenser must dispense twice per column to fill all wells of a 384 well plate). In one embodiment of the software 510 (FIG. 13), a Loop action 516 uses this TEXT FILE B as its counter. In other words, the Loop 516 executes a function that contains a Dispense action 512 of 0.1 µL the number of times denoted in the TEXT FILE B. Likewise, another Loop action 516 calls a Dispense action 512 of 1 µL the prescribed number of times. These Loops combined with Move actions 514 (which can also use the same text file, a different one or be programmed directly into the software 510 by the user) will produce a dispense recipe as shown in TABLE 3.

Thus, the 8-channel dispenser moves across the micro-well plate and dispenses a series of 0.1 µL drops into the appropriate wells. The 8-channel dispenser also moves across the micro-well plate a second time dispensing a series of 1 µL drops into the appropriate wells. Of course, other variations and modifications are possible, such as dispensing 0.1 µL from some channels while sequentially (serially) or substantially simultaneously (parallely) dispensing 1 µL form other channels. Alternatively, or in addition, either sequential (serial) or substantially simultaneous (parallel) valve firing may be employed.

### Case Study (Fluorescence Polarization Assay):

This case study uses text files to dispense reagents in a 384 well Fluorescence Polarization (FP) Assay. The volumes to generate the fluorescence versus peptide concentration standard curve, similar to the previous example, are shown below in TABLE 4.

**TABLE 4**

| Column | [Peptide] (nM) | Volume 50 nM Peptide (µL) | Volume PBS, 0.01 % Tween 20 (µL) |
|---|---|---|---|
| 1 | 0 | 0 | 5.00 |
| 2 | 2 | 0.2 | 4.80 |
| 3 | 4 | 0.4 | 4.60 |
| 4 | 6 | 0.6 | 4.40 |
| 5 | 8 | 0.8 | 4.20 |
| 6 | 10 | 1 | 4.00 |
| 7 | 12 | 1.2 | 3.80 |
| 8 | 14 | 1.4 | 3.60 |
| 9 | 16 | 1.6 | 3.40 |
| 10 | 18 | 1.8 | 3.20 |
| 11 | 20 | 2 | 3.00 |
| 12 | 22 | 2.2 | 2.80 |
| 13 | 24 | 2.4 | 2.60 |
| 14 | 26 | 2.6 | 2.40 |
| 15 | 28 | 2.8 | 2.20 |
| 16 | 30 | 3 | 2.00 |
| 17 | 32 | 3.2 | 1.80 |
| 18 | 34 | 3.4 | 1.60 |
| 19 | 36 | 3.6 | 1.40 |
| 20 | 38 | 3.8 | 1.20 |
| 21 | 40 | 4 | 1.00 |
| 22 | 42 | 4.2 | 0.80 |
| 23 | 44 | 4.4 | 0.60 |
| 24 | 46 | 4.6 | 0.40 |

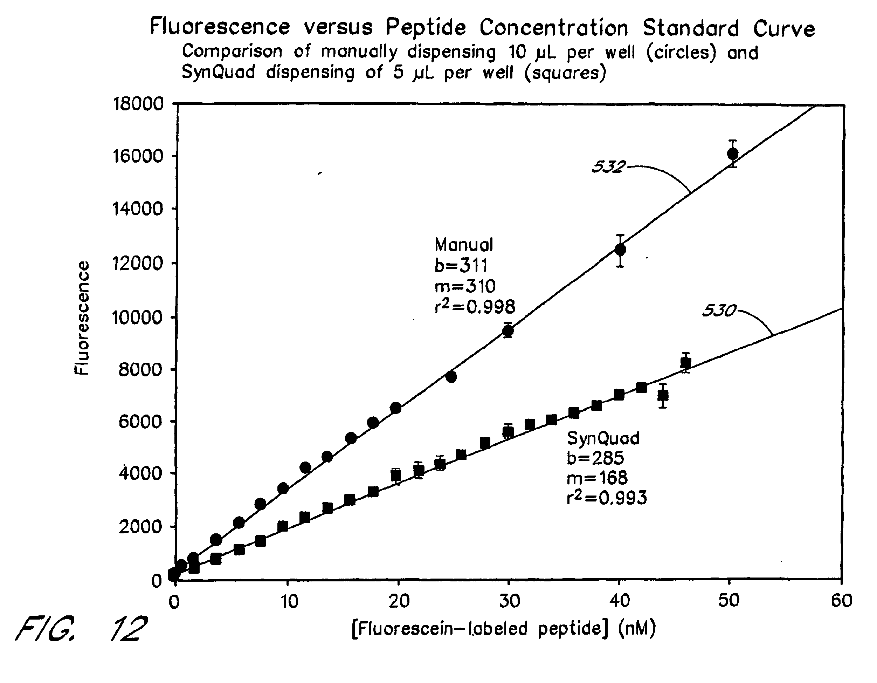

The standard curve 530 generated using the dispenser (SynQuad) with text-file enabled software is compared to a manually generated curve 532 in FIG. 12. (Note that the different slopes are due to the different volumes used to generate the curves).

The FP Assay involves adding the fluorescent peptide to a protein and measuring the change in fluorescence polarization due to the binding of the peptide by the protein. The volume additions are shown in the following TABLE 5. Because of the wide range of dispense volumes required in this case, three drop sizes were used, namely 1 µL, 0.1 µL, 0.01 µL, The results of the FP Assay are shown in FIG. 13 and compared favorably with the manual assay.

**TABLE 5**

| Well | [Protein] (µM) | Solution A (µL) | Solution B (µL) | Binding Buffer (µL) |
|---|---|---|---|---|
| 1 | 0 | 0 | 0 | 5 |
| 2 | 0.00 | 5 | 0 | 0 |
| 3 | 0.20 | 4.99 | 0.01 | 0 |
| 4 | 0.40 | 4.98 | 0.02 | 0 |
| 5 | 0.70 | 4.96 | 0.04 | 0 |
| 6 | 1.00 | 4.95 | 0.05. | 0 |
| 7 | 2.00 | 4.90 | 0.10 | 0 |
| 8 | 3.00 | 4.85 | 0.15 | 0 |
| 9 | 4.00 | 4.80 | 0.20 | 0 |
| 10 | 6.00 | 4.70 | 0.30 | 0 |
| 11 | 8.00 | 4.60 | 0.40 | 0 |
| 12 | 10.00 | 4.50 | 0.50 | 0 |
| 13 | 15.00 | 4.25 | 0.75 | 0 |
| 14 | 20.00 | 4.00 | 1.0 | 0 |
| 15 | 30.00 | 3.50 | 1.5 | 0 |
| 16 | 40.00 | 3.00 | 2.0 | 0 |
| 17 | 50.00 | 2.50 | 2.5 | 0 |
| 18 | 60.00 | 2.00 | 3.0 | 0 |
| 19 | 70.00 | 1.50 | 3.5 | 0 |
| 20 | 80.00 | 1.00 | 4.0 | 0 |
| 21 | 90.00 | 0.50 | 4.5 | 0 |
| 22 | 100.00 | 0 | 10 | 0 |

In TABLE 5, Solution A comprises a 20 nM fluorescent peptide/protein in binding buffer and Solution B comprises a 100 µM protein with 20 nM fluorescent peptide/protein in binding buffer.

### Motion and Dispense Control

As also discussed above, the coupled solenoid/syringe dispensing systems disclosed herein and in conjunction with text file control can perform complicated combinatorial dispensing. One goal is to be able to dispense "n" reagents in a combinatorial format to create both permutations of different reagents and permutations of different reagent volume ratios. A spreadsheet template is used to perform a transformation to develop a text format which allows the user to create a text file 520 (FIG. 11) or database 526 (FIG. 11) that describes which reagents, reagent volumes and X,Y (or X,Y,Z) coordinates for each specific mixture in the combinatorial array.

The text file format with the software 510 allows the software 510 to read the text file 52 (and/or database 528) and translate this into one or more sub-programs or functions (FIG. 11) that provide motion parameters and dispense volumes, among other things, for each dispense channel 128 (FIGS.1, 2A-2C) on the machine 108 (FIG. 1), 108a (FIG. 2A), 108b (FIG. 2B) or 108c (FIG. 2C) for a given position. The reagents may be supplied by reservoirs 16 see, for example, FIG. 1) or through an aspirate/dispense action to load the reagents into one or more dispense heads 128.

### Motion Control:

The software 510 (FIG. 11) can translate an array of dispense channels, typically in an M x N array, for example, where M = 1-8, N = 1-12, into a series of motions which places the individual dispense channels over the individual positions for dispensing of each volume. Other configurations such as M = 1 and N = 96 and other array configurations corresponding generally to 96, 384, 1536 and 2080 standard microtiter or microwell well plate formats may also be used with efficacy. There are several methods of combining XY (or XYZ) step and repeat motion with dispensing including serial scans, parallel scans and random access. "On-the-fly" dispensing can be performed by line scans.

### Serial Scan

In this case, each dispense channel 128 (FIGS. 1, 2A-2C) in the array is scanned individually over each dispense position. The dispense volume can vary from zero to some prescribed volume. Though this approach can be time consuming it is highly generic and versatile.

### Parallel Scan

When specific geometric relationships exist between the dispense positions and dispense channel positions a parallel scan be used. An example here would be using a dispense head with individual channels 128 (FIGS. 1 and 2A-2C) located on a grid of say 9 mm and dispensing into a microplate with wells on a 9 mm grid. In the parallel scan, the head is systematically scanned over the microwell array in both X and Y directions such that every dispense channel 128 is positioned over every well during the scan. At each position of the head there will be either be a well or no well under a dispense channel 128. The overlay of the head with array of dispense positions is described in the text file 520 (FIG.11) and/or database 528 (FIG. 11) with the volume for each dispense channel 128 for each position of the head array. For those positions where individual dispense channels 128 are not positioned over a well the dispense volume is zero. Thus each position the dispense head will have a prescribed volume for each dispense channel 128.

### Random Access

in this case, each dispense channel 128 (FIGS. 1 and 2A-2C) is moved directly to each well or target location that requires a volume from that dispense channel thereby skipping past wells or target locations that have zero volume for that particular channel.

### Line Scan

In the case where rows and for columns of a microplate are to be filled with the same volumes of a reagent a line mode of dispensing can be use where drop position, pitch and volume are programmed by the user into the text file 520, database 526 and/or the software program 510 (FIG.11). This mode of dispensing is a result of synchronization of XY motion with syringe motion. This allows the drop positions to be programmed. A combinatorial library can be created using combination of line scans of different reagents using scans in both X and Y directions.

### Dispense Control:

The software 510 (FIG. 11) has the capability of providing several methods, as described herein and below, by which a dispense volume can be created including line mode, burst mode and modulation mode. All of these modes can be used with reagent supplied directly from reagent reservoirs 116 connected to the syringe pumps 120 or by using the aspirate/dispense mode where the reagents are supplied in a format such as a microtiter plate and the like. In the aspirate/dispense case, the dispense channels 128 aspirate up reagent from the reagent source plate followed by dispensing.

Many of the embodiments of aspirate-dispense systems and methods as disclosed above are typically based on the use of a combination of syringe positive displacement combined with the action of a micro solenoid valve 203 (FIG. 3). In one embodiment, the syringe pump 120 has 192,000 steps for full stroke motion with syringe sizes varying from about 50 µL to about 5,000 µL. The smallest possible drop size is one full step of the syringe which in this particular case is 0.260 nL using a 50 µL syringe. The largest possible single distinct drop is based on the maximum open time for the micro-solenoid valve 203 in the open/close mode of use which in one embodiment is about 4 µL.

### Line Mode

As also discussed above, in this dispense mode continuous motion ("on-the-fly") is used and the syringe and motion stepper motors are synchronized. This allows the ability to dispense drops in well-defined linear arrays where drops can be dispensed at a programmed volume and pitch. The start position of the first drop is also programmed. In this case the syringe motion is continuous with XY motion and the solenoid valve 203 (FIG. 3) is opened at the appropriate number of motion motor steps. The volume of the drop that is to be dispensed determines the number of syringe motor steps.

Using this line mode of dispensing one can use linear scans (as described above) to rapidly dispense drops of the same size in a line. An example would be the use of 8 dispense channels 128 (see, for example, FIG. 28) on 9 mm centers to dispense drops into microtiter plates where the plate density can vary from 96 up to 9600 wells or greater. A practical example would be the use of a 4 or 8 channel system using 4 reagents to perform assay assembly in 1536 plate formats. The assay assembly in this example is the sequential dispensing of the four different reagents into all wells where each reagent could have volumes ranging from, for example, 100 nL to 3-8 µL.

### Burst Mode

As stated above, the software 510 (FIG. 11) provides the ability for step and repeat motion to place the dispense channels at programmed XY (or XYZ) positions. In this case, drops can be delivered to a position using the "burst" mode. The simplest example would be one drop, which is programmed as N steps of the syringe followed by an open/close of the solenoid valve 203 (FIG. 3). Repeating the single drop program results in additional drops at the same position.

In this mode of operation the solenoid valve 203 typically fully opens and closes for each cycle. The actuation frequency for a typical micro-solenoid valve such that it fully opens and closes has a maximum upper limit, as the skilled artisan will recognize. In one embodiment, this maximum frequency is in the range of 1000 Hz (or a total time of about 800 µsecs). The total cycle time includes both open time to allow fluid to flow and the close time that allows the valve plunger face 268 (FIG. 3) to fully close the valve. As drop volume increases so does the open time required to fully move the positive displacement of the fluid volume through the valve 204. Thus, as drop volume increases allowable operating frequency decreases. For example, at a drop size of 4 µL the operating frequency can be limited to about 15 Hz. These limitations apply to both burst and line modes as described above. Thus, in the above example, the volume delivery for the burst mode has a maximum flow rate of about 60 µL/sec.

Using this burst mode of operation combinatorial libraries can be done with, for example, 250 nL drop resolutions and fill rates per channel in the range from about 40-50 µL/sec. Thus, fill levels to about 500 µL can be achieved in reasonable times of tens of minutes or less per 96 wells for complex combinatorial libraries.

### Modulation Mode

As discussed above, the syringe positive displacement and solenoid valve 203 combination results in the syringe pump 120 determining the drop volume and the solenoid valve aiding in the ejection of a drop from the dispense channel nozzle 259 (FIG. 3). The modulation mode of operation takes place when the solenoid drive current for open/close of the valve 203 (FIG. 3) is driven at higher frequencies than allowed for a full open and close situation. In this case, the valve plunger face 258 does not seal against the valve seat 252 but oscillates in the open position. This oscillation energy further facilitates the ejection of the fluid from the tip 205 and/or nozzle 259 through the orifice 261. The ejection format can be in the form of a continuous jet with volume oscillations to individual drops. This mode of operation can typically be operated at much higher frequencies compared to the "burst" mode since the valve does not fully close. For example, theses frequencies can be in the range of about 8000 Hz

The modulation mode can advantageously provide high speed dispensing of fluid using small drop sizes. This provides a robust and accurate delivery of fluid as compared to some lower frequency operations. This method also allows for selection of parameters that eliminates the need for pressure adjustment to achieve steady state dispensing between desired droplet volume changes.

The modulation mode provides robust and accurate delivery of single drops over a wide range of ejected drop volumes, ranging from about 2 nl or less to over 100 nl. The modulation mode is discussed in further detail later herein.

### Applications:

The reagent aspirating and dispensing technologies described herein have many fields of application including genomics (DNA microarraying), proteomics (protein crystallization), combinatorial chemistry, high-throughput screening, assaying, among others in key markets such as life science research, biodiagnostics, pharmaceutical, agrochemical and materials science, among others. Some examples of applications are described below.

### Combinatorial Libraries

Using the different modes of dispensing one can for example produce a combinatorial array of reagents in a set of wells. If the number of reagents is 8 then any combination of reagents and volume ratios can be created in a particular well. Thus complex libraries can be produced. Examples of applications would be in materials science where one can mix different salt solutions followed by firing to produce arrays of inorganic compounds with different compositions. In these cases the experiment is designed in terms of the different mixtures and volumes of reagents for each experiment. This are formatted into a text file or other compatible database that can be read by the system software which then generates the library. The experiments can be laid out in terms of any of the dispense methods discussed above.

### Reformatting and Arraying

In these cases generally only one reagent is placed per spot but the same reagent may be placed more than once. Another important variable is that one may want to investigate different groupings of reagents either to explore possible interactions or for convenience of analysis.

### Combinatorial Synthesis

This application area is similar to combinatorial libraries except that variation in volume is not usually a variable but rather each reagent is supplied in excess followed by a process time, temperature and then a termination and clean step. Examples would be the creation of organic compound libraries such as drug compounds where each step is the addition of a monomer that chemically reacts with an existing molecule located on a stationary solid phase located in the well. Another example would be for oligonucleotide synthesis where the four different base pairs can be added in prescribed sequences in each well to grow different molecules. After each base pair addition there is an incubation time followed by different chemistry steps to conclude the reaction, and a clean step to remove excess residual chemicals. These steps are repeated for each of the base pair sequences prescribed by the experiment. These reactions are again usually done on a solid substrate such as beads located in a filter plate. All excess reagents are washed through the filter for each set of reactions. When the collection of molecules in completed chemistries are added for cleaving the oligonucleotides and collecting them into a master plate for additional processing such as for PCR.

The combination of aspirate-dispense technologies and text file data processing, as described herein, provides both the ability to quickly program and produce large complex libraries with a large volume and well density range. For example it provides the ability to reduce oligonucleotide synthesis to high-density formats such as 1536, which advantageously reduces the volume requirement of very expensive reagents. Modulation Mode

In most of the embodiments above, a drop is formed by using a positive displacement from the syringe 120 (FIG. 4) followed by an opening of the valve 203 (FIG. 3). Under steady state conditions the positive displacement is ejected as a drop equal to the positive displacement. Also discussed above are burst and line modes of dispensing where drops can be delivered at frequencies up to a maximum frequency (Fₘₐₓ). This maximum frequency generally corresponds to the upper limit at which the solenoid valve 203 can be fully opened and closed, and in one embodiment this maximum frequency is about 1000 Hz or slightly higher.

As discussed above, in a fixed position this burst mode can be used to create a larger volume at a single position by dispensing drops at a frequency around or below Fₘₐₓ. When coupled with motion, a line is generated composed of individual drops. In this burst mode individual drops are formed for each value actuation where the valve goes through a complete open/close cycle.

In one embodiment, the syringe pump 120 has a full stroke of 192,000 steps with syringe sizes ranging from about 50 µL to about 5,000 µL. For example, with a 250 µL syringe the step volume is about 1.3 nL. As the single drop volume becomes smaller, it can become harder to reliably dispense droplets using the full open/close valve opening such as in the burst and line modes.

As indicated above, the software 510 (FIG. 11) includes software algorithms based on a selection of a number of system and operational parameters/requirements such as solenoid valve open time, syringe speed, drop volume and number of drops. This allows the solenoid valve 203 (FIG. 3) to be used in a way denoted as "Modulation Mode".

For example, in the modulation mode, the system is programmed so that the syringe speed is 8 µL/sec, the single drop volume is 1.3 nL (0.0013 µL) with a total of 4 drops for a total volume of 5.2 nL, the open time for each drop is 150 µsecs with a total open time of 600 µsecs. The valve or time frequency can then be defined as 1/150µsecs = 6,667 Hz and the flow frequency can be defined as 8µL/sec/0.0013µL = 6,153 Hz.

In a single drop mode (valve fully opens and then closes), for example, the system is programmed so that the syringe speed is 8 µL/sec, the single drop volume is 5.2 nL, the open time for the drop is 150 µsecs. The valve frequency is then determined by the upper limit Fₘₐₓ, which in this particular case is about 1,200 Hz as determined by the minimum time for the valve to fully open and close.

The end result of each of the above approaches is a 5.2 nL drop being ejected from the nozzle and deposited on a substrate. However there are three distinct differences between the above examples of modulation mode and the single drop mode (full opening and closing of valve). Firstly, the time duration for the modulated dispensing is about 600 µsecs as compared to 150 µsecs for the single drop mode. Secondly, the open/close energy input is increased by a factor of 4 for the modulation mode. Thirdly, the effective valve frequency is in the range of 6,000 Hz per drop for the modulation mode.

It is contemplated here that the valve does not truly close at this modulation mode frequency level but only partially closes each cycle thus the fluid flow through the valve is being mechanically modulated. The modulated fluid flow then results in a more consistent and accurate release of a drop or volume from the nozzle tip. This is probably due to an oscillation of the fluid at the orifice opening 254, tip 205, nozzle 259 and/or exit orifice 261.

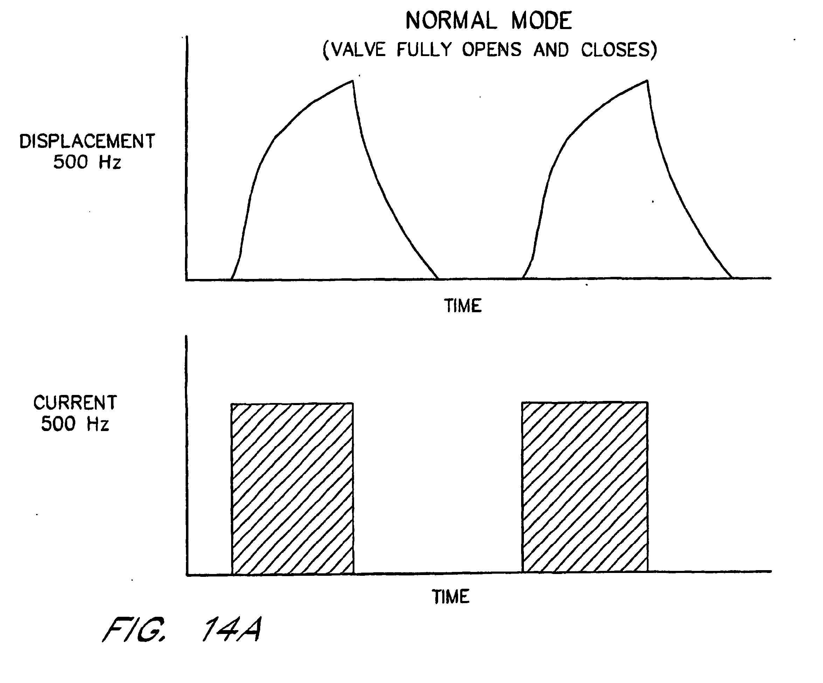

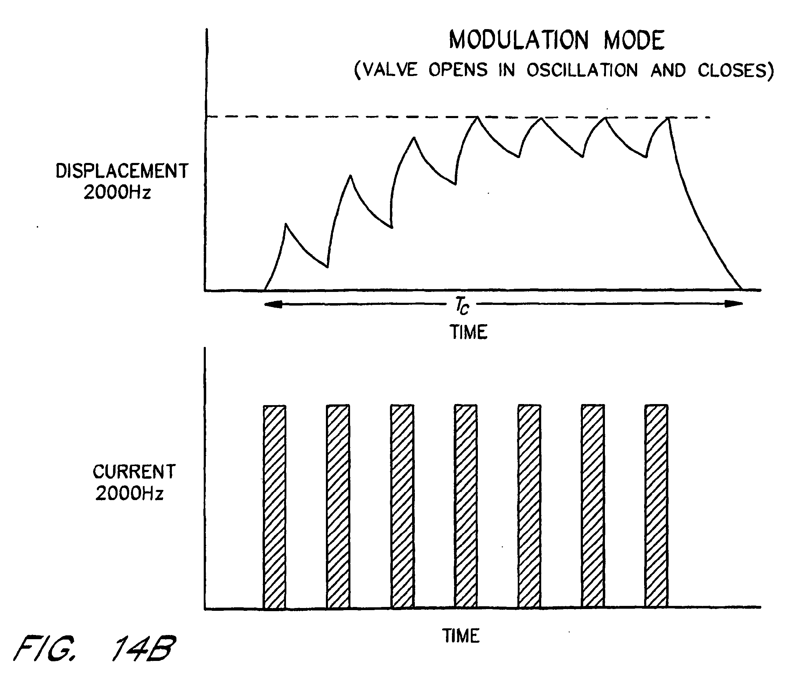

FIGS. 14A and 14B are schematic graphical representations of the valve stopper face displacement and current applied to the solenoid valve 203 (FIG. 3) as a function of time for the "normal" single drop mode (valve fully opens and then closes) and the modulation mode, respectively. For the normal mode (FIG. 14A) the valve 203 is operated at a lower frequency (say 500 Hz) and the valve 203 fully opens and closes, that is, the open displacement of the valve stopper 256 or stopper face 258 returns from some maximum value back to zero with a time interval where the open displacement remains zero.

In the modulation mode (FIG. 14B), for some higher frequency (say 2000 Hz), the mechanical response time is slower than the electrical frequency so that over time the open time builds up to a maximum open time but never returns to zero until the current is turned off. The valve 203 (that is, the valve stopper 256 or stopper face 258) then operates at some small displacement, delta, or oscillates relative to the maximum open displacement with a frequency equal to the drive current for the delta displacement.

The modulation mode may be used in bursts to dispense small volumes of droplets at a fixed position to provide high resolution for a larger total dispense volume. The modulation mode may also be used in a line or "on-the-fly" mode with efficacy.

A full modulation open cycle or time period is shown as T_{c} in FIG. 14B. This can comprise several cycles at which the solenoid driving current is raised and lowered to zero at a sufficiently high driving frequency. This is related to the number of valve cycles in the TABLES 6-9 below.

The modulation mode can be used to dispense volumes over about a full modulated cycle T_{c} in the range from about 0.1 nL to about 1000 nL. Preferably, the modulation mode is used to dispense volumes over about a full modulated cycle T, in the range from about 1 nL to about 100 nL More preferably, the modulation mode is used to dispense volumes over about a full modulated cycle T, in the range from about 2 nL to about 20 nL

TABLES 6-9 are matrices of ways to program drops based on syringe size, drop volume, flow rates and open times such that the system operates in a modulation mode. Most conditions were verified to eject well-defined drops.

TABLE 6 shows different conditions for different syringe sizes and flow rates at a constant open time using a single syringe step. The valve is opened and closed 4 times for each drop.

**TABLE 6**

| Syringe Volume (µL) | Step Volume (nL) | Syringe Steps | Syringe Volume (nL) | Flow Freq (Hz) | Flow Rate (µL/S) | Open Time (µS) | Time Freq (Hz) | Valve Cycles | Drop Size (nL) | Total Time (µs) |
|---|---|---|---|---|---|---|---|---|---|---|
| 50 | 0.260 | 1 | 0.260 | 6144 | 1.6 | 150 | 6667 | 4 | 1.04 | 600 |
| 100 | 0.521 | 1 | 0.521 | 6144 | 3.2 | 150 | 6667 | 4 | 2.08 | 600 |
| 250 | 1.302 | 1 | 1.302 | 6144 | 8.0 | 150 | 6667 | 4 | 5.21 | 600 |
| 500 | 2.604 | 1 | 2.604 | 6144 | 16.0 | 150 | 6667 | 4 | 10.42 | 600 |
| 1000 | 5.208 | 1 | 5.208 | 6144 | 32.0 | 150 | 6667 | 4 | 20.83 | 600 |
| 2500 | 13.021 | 1 | 13.021 | 6144 | 80.0 | 150 | 6667 | 4 | 52.08 | 600 |
| 5000 | 26.042 | 1 | 26.042 | 6144 | 160.0 | 150 | 6667 | 4 | 104.17 | 600 |
| | | | | | | | | | | |
| | | | | | | | | | | |
| 50 | 0.260 | 1 | 0.260 | 4608 | 1.2 | 200 | 5000 | 4 | 1.04 | 800 |
| 100 | 0.521 | 1 | 0.521 | 4608 | 2.4 | 200 | 5000 | 4 | 2.08 | 800 |
| 250 | 1.302 | 1 | 1.302 | 4608 | 6.0 | 200 | 5000 | 4 | 5.21 | 800 |
| 500 | 2.604 | 1 | 2.604 | 4608 | 12.0 | 200 | 5000 | 4 | 10.42 | 800 |
| 1000 | 5.208 | 1 | 5.208 | 4608 | 24.0 | 200 | 5000 | 4 | 20.83 | 800 |
| 2500 | 13.021 | 1 | 13.021 | 4608 | 60.0 | 200 | 5000 | 4 | 52.08 | 800 |
| 5000 | 26.042 | 1 | 26.042 | 4608 | 120.0 | 200 | 5000 | 4 | 104.17 | 800 |
| | | | | | | | | | | |
| | | | | | | | | | | |
| 50 | 0.260 | 1 | 0.260 | 3840 | 1.0 | 250 | 4000 | 4 | 1.04 | 1000 |
| 100 | 0.521 | 1 | 0.521 | 3840 | 2.0 | 250 | 4000 | 4 | 2.08 | 1000 |
| 250 | 1.302 | 1 | 1.302 | 3840 | 5.0 | 250 | 4000 | 4 | 5.21 | 1000 |
| 500 | 2.604 | 1 | 2.604 | 3840 | 10.0 | 250 | 4000 | 4 | 10.42 | 1000 |
| 1000 | 5.208 | 1 | 5.208 | 3840 | 20.0 | 250 | 4000 | 4 | 20.83 | 1000 |
| 2500 | 13.021 | 1 | 13.021 | 3840 | 50.0 | 250 | 4000 | 4 | 52.08 | 1000 |
| 5060 | 26.042 | 1 | 26.042 | 3840 | 100.0 | 250 | 4000 | 4 | 104.17 | 1000 |
| | | | | | | | | | | |
| | | | | | | | | | | |
| 50 | 0.260 | 1 | 0.260 | 3072 | 0.8 | 300 | 3333 | 4 | 1.04 | 1200 |
| 100 | 0.521 | 1 | 0.521 | 2880 | 1.5 | 300 | 3333 | 4 | 2.08 | 1200 |
| 250 | 1.302 | 1 | 1.302 | 3072 | 4.0 | 300 | 3333 | 4 | 5.21 | 1200 |
| 500 | 2.604 | 1 | 2.604 | 3072 | 8.0 | 300 | 3333 | 4 | 10.42 | 1200 |
| 1000 | 5.208 | 1 | 5.208 | 3072 | 16.0 | 300 | 3333 | 4 | 20.83 | 1200 |
| 2500 | 13.021 | 1 | 13.021 | 3072 | 40.0 | 300 | 3333 | 4 | 52.08 | 1200 |
| 5000 | 26.042 | 1 | 26.042 | 3072 | 80.0 | 300 | 3333 | 4 | 104.17 | 1200 |

TABLE 7 is similar to TABLE 6 but using 2 syringe steps per valve opening.

**TABLE 7**

| Syringe Volume (µL) | Step Volume (nL) | Syringe Steps | Syringe Volume (nL) | Flow Freq (Hz) | Flow Rate (µL/S) | Open Time (µS) | Time Freq (Hz) | Valve Cycles | Drop Size (nL) | Total Time (µS) |
|---|---|---|---|---|---|---|---|---|---|---|
| 50 | 0.260 | 2 | 0.521 | 3072 | 1.6 | 150 | 6667 | 2 | 1.04 | 300 |
| 100 | 0.521 | 2 | 1.042 | 3072 | 3.2 | 150 | 6667 | 2 | 2.08 | 300 |
| 250 | 1.302 | 2 | 2.604 | 3072 | 8.0 | 150 | 6667 | 2 | 5.21 | 300 |
| 500 | 2.604 | 2 | 5.208 | 3072 | 16.0 | 150 | 6667 | 2 | 10.42 | 300 |
| 1000 | 5.208 | 2 | 10.417 | 3072 | 32.0 | 150 | 6667 | 2 | 20.83 | 300 |
| 2500 | 13.021 | 2 | 26.042 | 3072 | 80.0 | 150 | 6667 | 2 | 52.08 | 300 |
| 5000 | 26.042 | 2 | 52.083 | 3072 | 160.0 | 150 | 6667 | 2 | 104.17 | 300 |
| | | | | | | | | | | |
| | | | | | | | | | | |
| 50 | 0.260 | 2 | 0.521 | 2304 | 1.2 | 200 | 5000 | 2 | 1.04 | 800 |
| 100 | 0.521 | 2 | 1.042 | 2304 | 2.4 | 200 | 5000 | 2 | 2.08 | 800 |
| 250 | 1.302 | 2 | 2.604 | 2304 | 6.0 | 200 | 5000 | 2 | 5.21 | 800 |
| 500 | 2.604 | 2 | 5.208 | 2304 | 12.0 | 200 | 5000 | 2 | 10.42 | 800 |
| 1000 | 5.208 | 2 | 10.417 | 2304 | 24.0 | 200 | 5000 | 2 | 20.83 | 800 |
| 2500 | 13.021 | 2 | 26.042 | 2304 | 60.0 | 200 | 5000 | 2 | 52.08 | 800 |
| 5000 | 26.042 | 2 | 52.083 | 2304 | 120.0 | 200 | 5000 | 2 | 104.17 | 800 |
| | | | | | | | | | | |
| | | | | | | | | | | |
| 50 | 0.260 | 2 | 0.521 | 1920 | 1.0 | 250 | 4000 | 2 | 1.04 | 1000 |
| 100 | 0.521 | 2 | 1.042 | 1920 | 2.0 | 250 | 4000 | 2 | 2.08 | 1000 |
| 250 | 1.302 | 2 | 2.604 | 1920 | 5.0 | 250 | 4000 | 2 | 5.21 | 1000 |
| 500 | 2.604 | 2 | 5.208 | 1920 | 10.0 | 250 | 4000 | 2 | 10.42 | 1000 |
| 1000 | 5.208 | 2 | 10.417 | 1920 | 20.0 | 250 | 4000 | 2 | 20.83 | 1000 |
| 2500 | 13.021 | 2 | 26.042 | 1920 | 50.0 | 250 | 4000 | 2 | 52.08 | 1000 |
| 5000 | 26.042 | 2 | 52.083 | 1920 | 100.0 | 250 | 4000 | 2 | 104.17 | 1000 |
| | | | | | | | | | | |
| | | | | | | | | | | |
| 50 | 0.260 | 2 | 0.521 | 1536 | 0.8 | 300 | 3333 | 2 | 1.04 | 1200 |
| 100 | 0.521 | 2 | 1.042 | 1440 | 1.5 | 300 | 3333 | 2 | 2.08 | 1200 |
| 250 | 1.302 | 2 | 2.604 | 1536 | 4.0 | 300 | 3333 | 2 | 5.21 | 1200 |
| 500 | 2.604 | 2 | 5.208 | 1536 | 8.0 | 300 | 3333 | 2 | 10.42 | 1200 |
| 1000 | 5.208 | 2 | 10.417 | 1536 | 16.0 | 300 | 3333 | 2 | 20.83 | 1200 |
| 2500 | 13.021 | 2 | 26.042 | .1536 | 40.0 | 300 | 3333 | 2 | 52.08 | 1200 |
| 5000 | 26.042 | 2 | 52.083 | 1536 | 80.0 | 300 | 3333 | 2 | 104.17 | 1200 |

TABLE 8 is for a 250 µL syringe using a 150 µL open time but varying the syringe steps per valve opening from 1-7. In all cases good drops were dispensed.

**TABLE 8**

| Syringe Volume (µL) | Step Volume (nL) | Syringe Steps | Syringe Volume (nL) | Flow Freq (Hz) | Flow Rate (µL/s) | Open Time (µs) | Time Freq (Hz) | Valve Cycles | Drop Size (nL) | Total Time (µs) |
|---|---|---|---|---|---|---|---|---|---|---|
| 250 | 1.302 | 1 | 1.302 | 6144 | 8.0 | 150 | 6667 | 2 | 2.60 | 300 |
| 250 | 1.302 | 2 | 2.604 | 3072 | 8.0 | 150 | 6667 | 2 | 5.21 | 300 |
| 250 | 1.302 | 3 | 3.906 | 2048 | 8.0 | 150 | 6667 | 2 | 7.81 | 300 |
| 250 | 1.302 | 4 | 5.208 | 1536 | 8.0 | 150 | 6667 | 2 | 10.42 | 300 |
| 250 | 1.302 | 5 | 6.510 | 1229 | 8.0 | 150 | 6667 | 2 | 13.02 | 300 |
| 250 | 1.302 | 6 | 7.813 | 1024 | 8.0 | 150 | 6667 | 2 | 15.63 | 300 |
| 250 | 1.302 | 7 | 9.115 | 878 | 8.0 | 150 | 6667 | 2 | 18.23 | 300 |

TABLE 9 is the an extension of Table 8 using a 250 µL syringe size but using decreasing flow rates and longer open times. In all cases drops were delivered.

**TABLE 9**

| Syringe Volume (µL) | Step Volume (nL) | Syringe Steps | Syringe Volume (nL) | Flow Freq (Hz) | Flow Rate (µL/s) | Open Time (µS) | Time Freq (Hz) | Valve Cycles | Drop Size (nL) | Total Time (µS) |
|---|---|---|---|---|---|---|---|---|---|---|
| 250 | 1.302 | 1 | 1.302 | 6144 | 8.0 | 150 | 6667 | 2 | 2.60 | 300 |
| 250 | 1.302 | 2 | 2.604 | 3072 | 8.0 | 150 | 6667 | 2 | 5.21 | 300 |
| 250 | 1.302 | 3 | 3.906 | 2048 | 8.0 | 150 | 6667 | 2 | 7.81 | 300 |
| 250 | 1.302 | 4 | 5.208 | 1536 | 8.0 | 150 | 6667 | 2 | 10.42 | 300 |
| 250 | 1.302 | 5 | 6.510 | 1229 | 8.0 | 150 | 6667 | 2 | 13.02 | 300 |
| 250 | 1.302 | 6 | 7.813 | 1024 | 8.0 | 150 | 6667 | 2 | 15.63 | 300 |
| 250 | 1.302 | 7 | 9.115 | 878 | 8.0 | 150 | 6667 | 2 | 18.23 | 300 |
| | | | | | | | | | | |
| | | | | | | | | | | |
| 250 | 1.302 | 1 | 1.302 | 4608 | 6.0 | 200 | 5000 | 2 | 2.60 | 800 |
| 250 | 1.302 | 2 | 2.604 | 2304 | 6.0 | 200 | 5000 | 2 | 5.21 | 800 |
| 250 | 1.302 | 3 | 3.906 | 1536 | 6.0 | 200 | 5000 | 2 | 7.81 | 800 |
| 250 | 1.302 | 4 | 5.208 | 1152 | 6.0 | 200 | 5000 | 2 | 10.42 | 800 |
| 250 | 1.302 | 5 | 6.510 | 922 | 6.0 | 200 | 5000 | 2 | 13.02 | 800 |
| 250 | 1.302 | 6 | 7.813 | 768 | 6.0 | 200 | 5000 | 2 | 15.63 | 800 |
| 250 | 1.302 | 7 | 9.115 | 658 | 6.0 | 200 | 5000 | 2 | 18.23 | 800 |
| | | | | | | | | | | |
| | | | | | | | | | | |
| 250 | 1.302 | 1 | 1.302 | 3840 | 5.0 | 250 | 4000 | 2 | 2.60 | 1000 |
| 250 | 1.302 | 2 | 2.604 | 1920 | 5.0 | 250 | 4000 | 2 | 5.21 | 1000 |
| 250 | 1.302 | 3 | 3.906 | 1280 | 5.0 | 250 | 4000 | 2 | 7.81 | 1000 |
| 250 | 1.302 | 4 | 5.208 | 960 | 5.0 | 250 | 4000 | 2 | 10.42 | 1000 |
| 250 | 1.302 | 5 | 6.510 | 768 | 5.0 | 250 | 4000 | 2 | 13.02 | 1000 |
| 250 | 1.302 | 6 | 7.813 | 640 | 5.0 | 250 | 4000 | 2 | 15.63 | 1000 |
| 250 | 1.302 | 7 | 9.115 | 549 | 5.0 | 250 | 4000 | 2 | 18.23 | 1000 |
| | | | | | | | | | | |
| | | | | | | | | | | |
| 250 | 1.302 | 1 | 1.302 | 3072 | 4.0 | 300 | 3333 | 2 | 2.60 | 1200 |
| 250 | 1.302 | 2 | 2.604 | 1536 | 4.0 | 300 | 3333 | 2 | 5.21 | 1200 |
| 250 | 1.302 | 3 | 3.906 | 1024 | 4.0 | 300 | 3333 | 2 | 7.81 | 1200 |
| 250 | 1.302 | 4 | 5.208 | 768 | 4.0 | 300 | 3333 | 2 | 10.42 | 1200 |
| 250 | 1.302 | 5 | 6.510 | 614 | 4.0 | 300 | 3333 | 2 | 13.02 | 1200 |
| 250 | 1.302 | 6 | 7.813 | 512 | 4.0 | 300 | 3333 | 2 | 15.63 | 1200 |
| 250 | 1.302 | 7 | 9.115 | 439 | 4.0 | 300 | 3333 | 2 | 18.23 | 1200 |

One advantage of the modulation mode is that it provides a robust method of delivering small volumes such as below 50-100 nL. An example would be to deliver 5.2 nL with a 250 µL syringe using one syringe step (1.3 nL) with one valve actuation at 150 µS intervals repeated 4 times. This mode of operation provides reliable drop ejection with low coefficient of variations. These are contemplated to be due to efficient ejection of the positive displacement of fluid from the channel nozzle tip or orifice using an enhanced level of energy transfer from the solenoid valve.

Another advantage of the modulation mode is that it can provide high speed volume delivery. That is, this mode of operation can deliver fluid at much higher rates, which are typically limited by syringe speeds rather than the solenoid open/close times. For example using a 5000 µL syringe with a single step volume of 0.026 µL operating at 6000 Hz the volume delivery rate of ejected fluid is in the range of 150 µL/sec.

In the burst and line modes of operation, a change in desired drop size can result in a change in the optimum steady state pressure for quantitative delivery of drop volumes. Thus pressure adjustment may be required which can add more time and complication to the dispense process. The modulation mode can be used to eliminate the need for pressure adjustment by building drops volumes based on the number of valve oscillations and a common syringe step size.

### Pictorial Illustration of Certain Embodiments

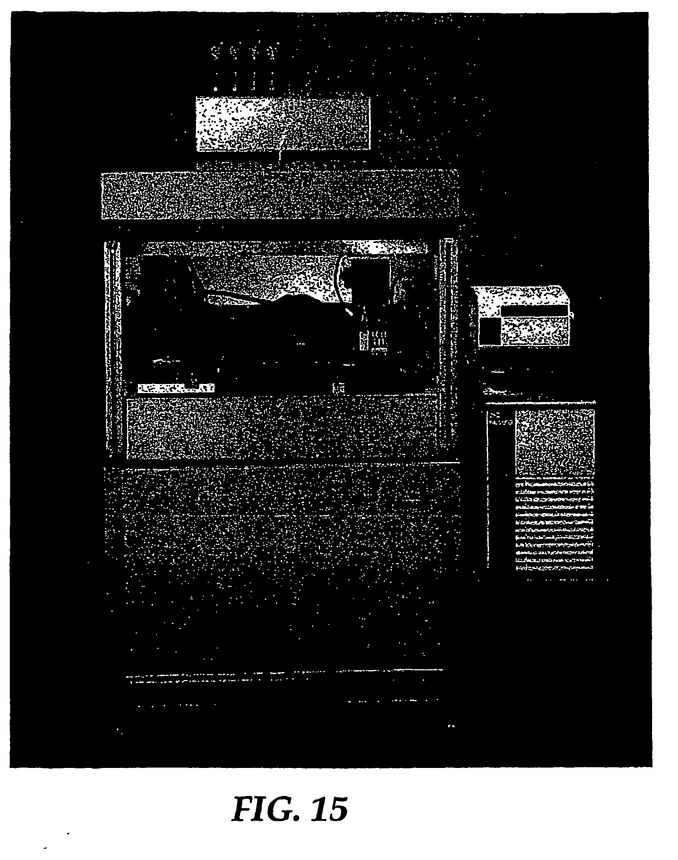

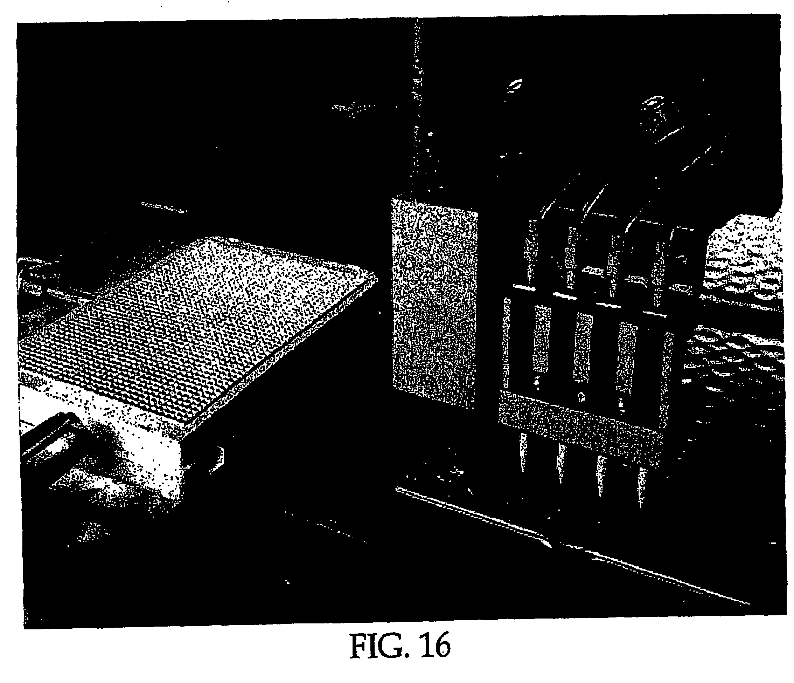

FIG. 15 is a photographic view of an aspirating and dispensing apparatus comprising a dispense head with a (1 x 4) array of dispense channels and having features and advantages in accordance with one embodiment of the invention. FIG.16 is a photographic close-up of the dispensing head of FIG. 15.

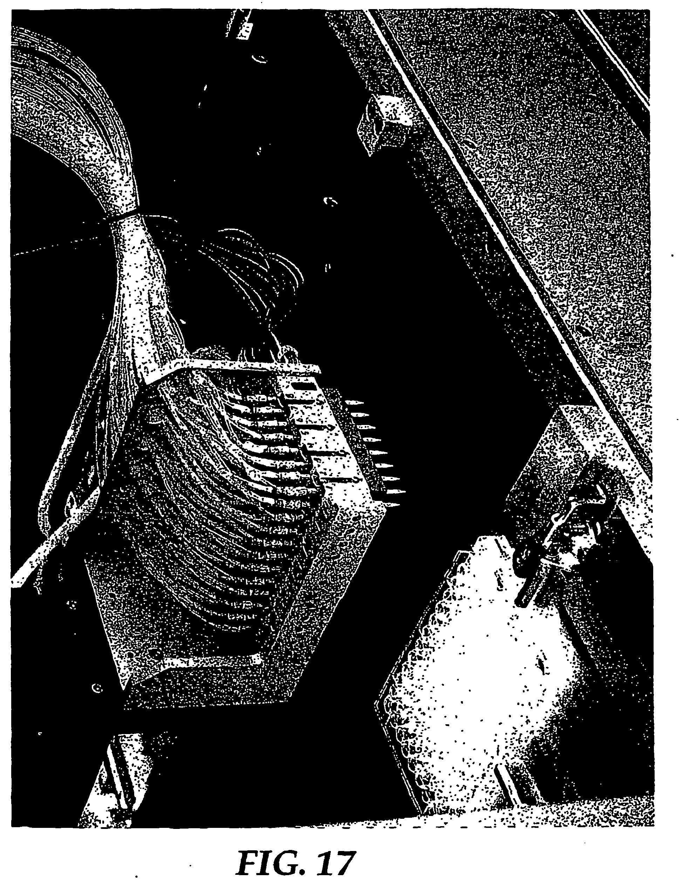

FIG. 17 is a photographic close up view of a dispensing head comprising a (8 x 12) array of dispensing channels and having features and advantages in accordance with one embodiment of the invention.

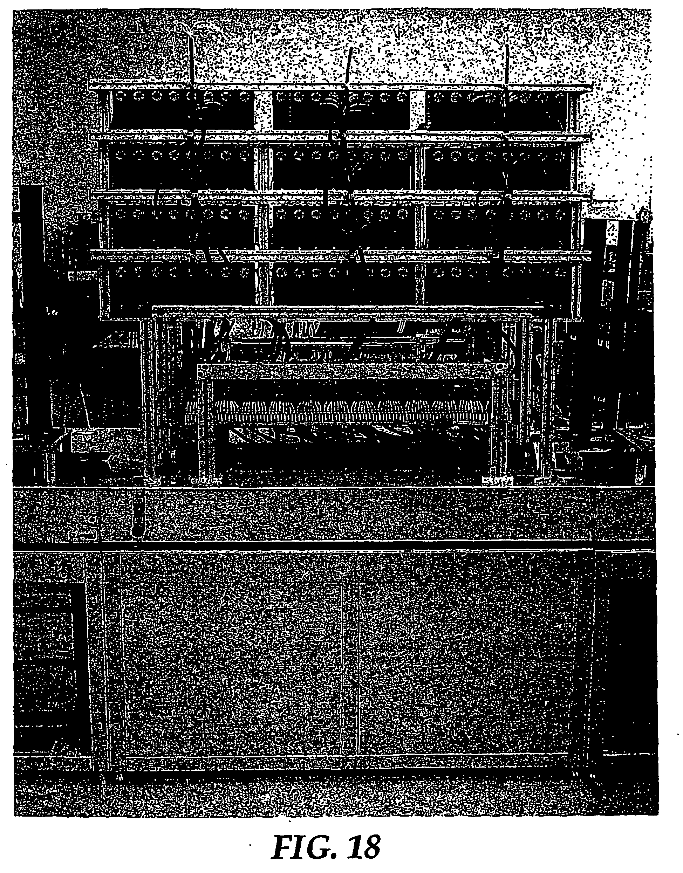

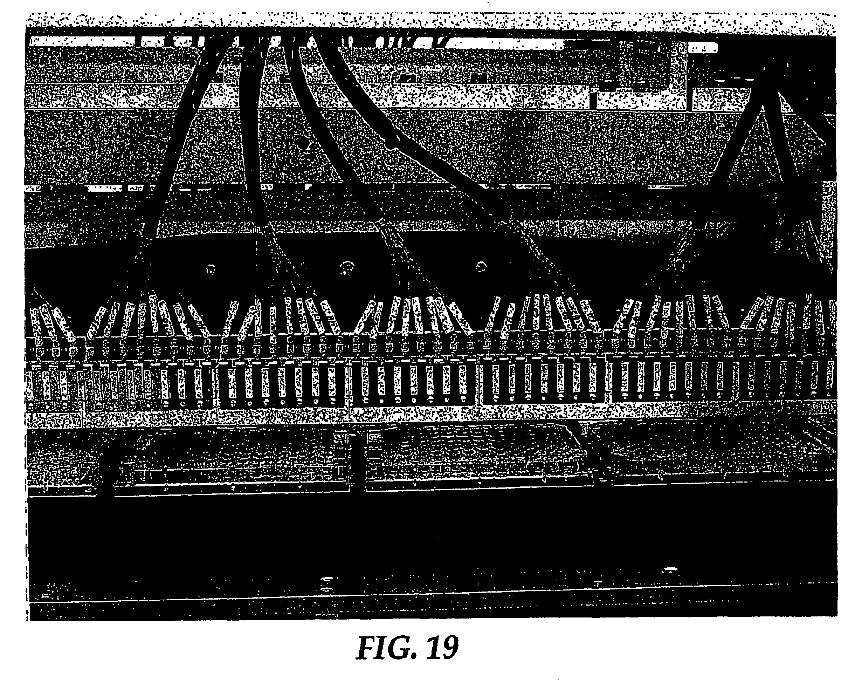

FIG. 18 is a photographic view of an aspirating and dispensing apparatus comprising a dispense head with a (1 x 96) array of dispense channels and having features and advantages in accordance with one embodiment of the invention. FIG. 19 is a photographic close-up of the dispensing head of FIG. 18.

## Claims

1. A method for high speed precise dispensing of a microfluidic quantity of a reagent onto or into a target, comprising the steps of:
positively displacing a precise quantity of said reagent to a dispenser
forming a volume of said reagent for ejection from said dispenser onto or into said target by operating a solenoid valve at a frequency such that its operation is mechanically modulated , said solenoid valve comprising a seat and a moveable plunger that oscillates when said solenoid valve is operated at said frequency but does not contact said seat so that it remains open in oscillation to facilitate ejection of said volume, said volume being of an integral multiple of said precise quantity and less than or equal to said microfluidic quantity; and
controlling and coordinating said volume of said reagent dispensed at a predetermined location on or in said target.

2. The method of Claim 1, wherein said volume is in the range from 2 nL to 20 nL.

3. The method of Claim 1, wherein said volume is in the range from 1 nL to 100 nL.

4. The method of Claim 1, wherein said volume is in the range about 0.1 nL to 1000 nL.

5. The method of any preceding Claim, wherein said volume is dispensed in the form of multiple droplets.

6. The method of Claim 5, wherein said volume is dispensed in the form of multiple droplets of varying size.

7. The method of any of Claims 1 to 4, wherein said volume is dispensed in the form of a jet.

8. The method of any preceding Claim, wherein said frequency at which said solenoid valve is operated is about 6000 Hz.

9. The method of any preceding Claim, further comprising aspirating said reagent from a receptacle prior to dispensing of said reagent.

10. The method of any preceding Claim, further comprising creating a user-defined text file to define a reagent dispense pattern or array that is to be formed on or in said target.

11. The method of Claim 10, wherein said text file comprises a list of tab-delimited numbers.

12. The method of Claim 10, wherein said text file is created by a transformation of raw data in a spreadsheet template.

13. The method of Claim 10, wherein said text file is accessible by a controller to control and coordinate said volume of said reagent.

14. The method of any preceding Claim, wherein the volume of said reagent is formed substantially outside said dispenser.

15. The method of any preceding Claim, wherein fluid flow through said solenoid valve is mechanically modulated.

16. The method of any preceding Claim, wherein said solenoid valve is open in oscillation for a predetermined time period and is closed before and after said time period.

17. The method of any preceding Claim, wherein positively displacing a precise quantity of said reagent to a dispenser comprises operating a direct current fluid source to positively displace said precise quantity of said reagent to said dispenser.

18. The method of Claim 17, wherein said dispenser comprises a tip in fluid communication with said solenoid valve such that said solenoid valve is intermediate said tip and said direct current fluid source, and wherein said reagent is dispensed through said tip onto or into said target.

19. The method of any of Claims 10 to 13, further comprising providing relative motion between said dispenser and said target with said relative motion being dependent on said text file.

## Patentansprüche

1. Verfahren zur präzisen Hochgeschwindigkeitsabgabe einer mikrofluidischen Menge eines Reagens auf oder in ein Ziel, das folgende Schritte umfasst:
Verdrängen einer präzisen Menge des genannten Reagens an eine Abgabevorrichtung;
Bilden eines Volumens des genannten Reagens zum Ausstoßen aus der genannten Abgabevorrichtung auf oder in das genannte Ziel durch Betätigen eines Magnetventils mit einer Frequenz, so dass seine Betätigung mechanisch moduliert wird, wobei das genannte Magnetventil einen Sitz umfasst und einen beweglichen Stößel umfasst, der schwingt, wenn das genannte Magnetventil mit der genannten Frequenz betätigt wird, aber den genannten Sitz nicht berührt, so dass es in Schwingung geöffnet bleibt, um das Ausstoßen des genannten Volumens zu erleichtern, wobei das genannte Volumen ein ganzzahliges Vielfaches der genannten präzisen Menge und kleiner oder gleich der genannten mikrofluidischen Menge ist; und
Steuern und Koordinieren des genannten Volumens des genannten Reagens, das an einem vorherbestimmten Ort auf oder in das genannte Ziel abgegeben wird.

2. Verfahren nach Anspruch 1, wobei das genannte Volumen im Bereich von 2 nl bis 20 nl liegt.

3. Verfahren nach Anspruch 1, wobei das genannte Volumen im Bereich von 1 nl bis 100 nl liegt.

4. Verfahren nach Anspruch 1, wobei das genannte Volumen im Bereich von 0,1 nl bis 1000 nl liegt.

5. Verfahren nach einem der vorangehenden Ansprüche, wobei das genannte Volumen in Form von mehreren Tröpfchen abgegeben wird.

6. Verfahren nach Anspruch 5, wobei das genannte Volumen in Form von mehreren Tröpfchen mit unterschiedlicher Größe abgegeben wird.

7. Verfahren nach einem der Ansprüche 1 bis 4, wobei das genannte Volumen in Form von einem Strahl abgegeben wird.

8. Verfahren nach einem der vorangehenden Ansprüche, wobei die genannte Frequenz, mit der das genannte Magnetventil betätigt wird, ungefähr 6000 Hz beträgt.

9. Verfahren nach einem der vorangehenden Ansprüche, weiter umfassend das Ansaugen des genannten Reagens aus einem Behältnis vor dem Abgeben des genannten Reagens.

10. Verfahren nach einem der vorangehenden Ansprüche, weiter umfassend das Erzeugen einer benutzerdefinierten Textdatei, um ein Reagensabgabemuster oder eine Reagensabgabeanordnung zu definieren, das beziehungsweise die auf oder in dem genannten Ziel gebildet werden soll.

11. Verfahren nach Anspruch 10, wobei die genannte Textdatei eine Auflistung von durch Tabulatorzeichen getrennten Zahlen umfasst.

12. Verfahren nach Anspruch 10, wobei die genannte Textdatei durch eine Umwandlung von Rohdaten in einer Tabellenkalkulations-Vorlage erzeugt wird.

13. Verfahren nach Anspruch 10, wobei die genannte Textdatei von einem Kontroller zugänglich ist, um das genannte Volumen des genannten Reagens zu steuern und zu koordinieren.

14. Verfahren nach einem der vorangehenden Ansprüche, wobei das Volumen des genannten Reagens im Wesentlichen außerhalb der genannten Abgabevorrichtung gebildet wird.

15. Verfahren nach einem der vorangehenden Ansprüche, wobei Fluidfluss durch das genannte Magnetventil mechanisch moduliert wird.

16. Verfahren nach einem der vorangehenden Ansprüche, wobei das genannte Magnetventil für eine vorherbestimmte Zeitperiode in Schwingung geöffnet ist und vor und nach der genannten Zeitperiode geschlossen ist.

17. Verfahren nach einem der vorangehenden Ansprüche, wobei das Verdrängen einer präzisen Menge des genannten Reagens an eine Abgabevorrichtung das Betätigen einer Gleichstrom-Fluidquelle umfasst, um die genannte präzise Menge des genannten Reagens an die genannte Abgabevorrichtung zu verdrängen.

18. Verfahren nach Anspruch 17, wobei die genannte Abgabevorrichtung eine Spitze in Fluidverbindung mit dem genannten Magnetventil umfasst, so dass sich das Magnetventil zwischen der genannten Spitze und der genannten Gleichstrom-Fluidquelle befindet und wobei das genannte Reagens durch die genannte Spitze auf oder in das genannte Ziel abgegeben wird.

19. Verfahren nach einem der Ansprüche 10 bis 13, weiter umfassend das Bereitstellen von Relativbewegung zwischen der genannten Abgabevorrichtung und dem genannten Ziel, wobei die genannten Relativbewegung abhängig von der genannten Textdatei ist.

## Revendications

1. Procédé de distribution précise à grande vitesse d'une quantité microfluidique d'un réactif sur ou dans une cible, comportant les étapes consistant à :
déplacer positivement une quantité précise dudit réactif dans un distributeur ;
former un volume dudit réactif à des fins d'éjection en provenance dudit distributeur sur ou dans ladite cible en actionnant une valve à solénoïde à une fréquence telle que son fonctionnement est modulé mécaniquement, ladite valve à solénoïde comportant un siège et un piston mobile qui oscille quand ladite valve à solénoïde est actionnée à ladite fréquence mais qui n'entre pas en contact avec ledit siège, de telle manière qu'elle reste ouverte en cours d'oscillation pour faciliter l'éjection dudit volume, ledit volume étant un multiple entier de ladite quantité précise et inférieur ou égal à ladite quantité microfluidique ; et
contrôler et coordonner ledit volume dudit réactif distribué en un emplacement prédéterminé sur ou dans ladite cible.

2. Procédé selon la revendication 1, dans lequel ledit volume se situe dans la gamme allant de 2 nL à 20 nL.

3. Procédé selon la revendication 1, dans lequel ledit volume se situe dans la gamme allant de 1 nL à 100 nL.

4. Procédé selon la revendication 1, dans lequel ledit volume se situe dans la gamme allant de 0,1 nL à 1000 nL.

5. Procédé selon l'une quelconque des revendications précédentes, dans lequel ledit volume est distribué sous la forme de multiples gouttelettes.

6. Procédé selon la revendication 5, dans lequel ledit volume est distribué sous la forme de multiples gouttelettes de différentes tailles.

7. Procédé selon l'une quelconque des revendications 1 à 4, dans lequel ledit volume est distribué sous la forme d'un jet.

8. Procédé selon l'une quelconque des revendications précédentes, dans lequel ladite fréquence à laquelle ladite valve à solénoïde fonctionne est environ de 6000 Hz.

9. Procédé selon l'une quelconque des revendications précédentes, comportant par ailleurs l'aspiration dudit réactif en provenance d'un récipient avant la distribution dudit réactif.

10. Procédé selon l'une quelconque des revendications précédentes, comportant par ailleurs la création d'un fichier de texte défini par l'utilisateur pour définir un motif ou ordre de distribution du réactif qui est formé sur ou dans ladite cible.

11. Procédé selon la revendication 10, dans lequel ledit fichier de texte comporte une liste de nombres séparés par des tabulateurs.

12. Procédé selon la revendication 10, dans lequel ledit fichier de texte est créé par une transformation de données brutes dans un modèle de feuille de calcul.

13. Procédé selon la revendication 10, dans lequel ledit fichier de texte est accessible par un contrôleur pour contrôler et coordonner ledit volume dudit réactif.

14. Procédé selon l'une quelconque des revendications précédentes, dans lequel ledit volume dudit réactif est formé dans une large mesure en dehors dudit distributeur.

15. Procédé selon l'une quelconque des revendications précédentes, dans lequel l'écoulement du fluide au travers de ladite valve à solénoïde est modulé mécaniquement.

16. Procédé selon l'une quelconque des revendications précédentes, dans lequel ladite valve à solénoïde est ouverte en cours d'oscillation pendant une durée prédéterminée et est fermée avant et après ladite durée.

17. Procédé selon l'une quelconque des revendications précédentes, dans lequel l'étape consistant à déplacer positivement une quantité précise dudit réactif dans un distributeur comporte l'étape consistant à faire fonctionner une source de fluide à courant continu pour déplacer positivement ladite quantité précise dudit réactif dans ledit distributeur.

18. Procédé selon la revendication 17, dans lequel ledit distributeur comporte une pointe en communication fluide avec ladite valve à solénoïde de telle manière que ladite valve à solénoïde est intermédiaire entre ladite pointe et ladite source de fluide à courant continu, et dans lequel ledit réactif est distribué au travers de ladite pointe sur ou dans ladite cible.

19. Procédé selon l'une quelconque des revendications 10 à 13, comportant par ailleurs la mise en oeuvre d'un mouvement relatif entre ledit distributeur et ladite cible, ledit mouvement relatif étant fonction dudit fichier de texte.
